(19) Europäisches Patentamt

European Patent Office

Office européen des brevets

(11) EP 1 726 970 A1

(12) EUROPEAN PATENT APPLICATION
published in accordance with Art. 158(3) EPC

(43) Date of publication:
29.11.2006 Bulletin 2006/48

(51) Int Cl.:
G01S 5/02 (2006.01)    H04B 7/26 (2006.01)

(21) Application number: 05720366.3

(22) Date of filing: 09.03.2005

(86) International application number:
PCT/JP2005/004094

(87) International publication number:
WO 2005/088335 (22.09.2005 Gazette 2005/38)

(84) Designated Contracting States:
AT BE BG CH CY CZ DE DK EE ES FI FR GB GR
HU IE IS IT LI LT LU MC NL PL PT RO SE SI SK TR

(30) Priority: 12.03.2004 JP 2004070010

(71) Applicant: NEC CORPORATION
Minato-ku,
Tokyo 108-8001 (JP)

(72) Inventor: MORISAKI, Mitsunori,
NEC Corporation
Tokyo 108-8001 (JP)

(74) Representative: Vossius & Partner
Siebertstrasse 4
81675 München (DE)

(54) **POSITIONING SYSTEM**

(57)    A positioning server (20) is equipped with a database in which required-number-of-measurements judgment information that serves as judgment information with which to decide the number of measurements is associated with wireless terminal station-to-be-positioned information with which to identify objects to be positioned. The positioning server (20), which decides the number of measurements, receives the wireless terminal station-to-be-positioned information of a terminal to be positioned, then retrieves from the database the required-number-of-measurements judgment information associated with the wireless terminal station-to-be-positioned information, and then decides the number of measurements based on the required-number-of-measurements judgment information. In this way, a stable positioning can be achieved by deciding the number of measurements in accordance with the characteristics of a wireless station to be positioned and a wireless station that performs the measurements.

## FIG. 5

POSITIONING SERVER

DATABASE SECTION — 202

201 — NECESSARY MEASUREMENT NUMBER-OF-TIMES DECISION FUNCTION SECTION

200

POSITIONING REQUEST TO WIRELESS TERMINAL

OBJECT OF MEASUREMENT TO WIRELESS BASE STATION

POSITIONING PROCESS CONTROLLER

# Description

## [APPLICABLE FIELD IN THE INDUSTRY]

The present invention relates to a positioning technology for specifying a position of a wireless station such as a wireless terminal, and more particularly, to a positioning technology for deciding the measurement number of times responding to characteristics of a wireless station that is an object of positioning, a wireless station performing a measurement, etc.

## [BACKGROUND ART]

In a mobile communication system, the technology has been proposed of performing a measurement of a radio wave propagation time between each of a plurality of base stations and a terminal appliance plural times to calculate a position of the terminal appliance from the measurement result (for example, patent document 1). This technology is for, in a case where a positioning error becomes large due to the environments such as a SNR (SNR: Signal to Noise Ratio) and a measurement position, working out the base station, being a factor of enlarging the positioning error, to repeatedly performing a measurement until the positioning error falls under a threshold.
Patent document 1: JP-P2002-228735A

## [DISCLOSURE OF THE INVENTION]

## [PROBLEMS TO BE SOLVED BY THE INVENTION]

The cause of a dispersion in the radio wave propagation time, however, stems not only from the factor by the environment such as the SNR, but also from the factor by internal circuit characteristics of the wireless station that is an object of positioning and the wireless station in the measurement side.

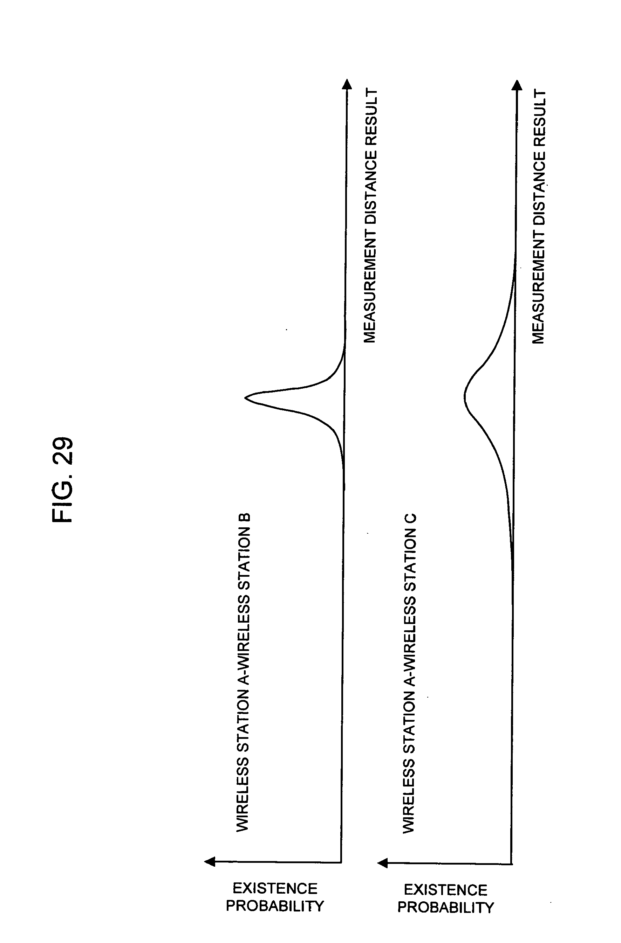

Herein, in Fig. 29, one example is shown of a measurement distance result and an existence probability in changing a combination of the wireless station in the measurement side and the wireless station, being an object of positioning in the identical environments. Fig. 29 shows that a wireless station A is a wireless station that is an object of positioning, and each of wireless stations B and C is a wireless station, in the measurement side. As shown in this figure, replacing the wireless station in the measurement side with another one gives rise to a different dispersion in the measurement distance result also in the identical environment.

Thus, in the technology having only an influence of the environment under which the wireless station is located taken into consideration like the conventional technology, upon replacing the wireless station performing a measurement and the wireless station that is an object of positioning, it follows that the measurement number of times is not appropriate, the positioning error becomes large, and the measurement is performed beyond a necessity also in a case where the environment remains unchanged, which gives rise to the problem that an increase in measurement time and communication traffic is incurred.

Thereupon, the present invention has been accomplished in consideration of the above-mentioned problem, and an object thereof lies in solving the above-mentioned problems by providing a positioning technology capable of performing a stabilized positioning by deciding the measurement number of times responding to characteristics of the wireless station that is an object of positioning and the wireless station performing a measurement.

Further, an object of the present invention lies in solving the above-mentioned problem by providing appropriate positioning environments suitable to a positioning precision by deciding the measurement number of times by taking into consideration characteristics of the wireless station that is an object of positioning and the wireless station performing a measurement and yet by examining a positioning precision that is requested.

Further, an object of the present invention lies in solving the above-mentioned problem by providing a positioning technology allowing the measurement time and the communication traffic to be reduced, by deciding the appropriate measurement number of times by taking into consideration characteristics of the wireless station that is an object of positioning and the wireless station performing a measurement.

## [MEANS TO SOLVE THE PROBLEM]

The first invention for solving the above-mentioned problem, which is A positioning system for determination a position of wireless station that is an object of positioning using measuring a communication situation between a said wireless station that is an object of positioning and each of a plurality of wireless stations other than said wireless station that is an object of positioning, characterized in including: a database having identification information of the wireless station that is an object of positioning, or identification information of the plurality of the wireless stations and necessary measurement number-of-times conclusion information for drawing a conclusion on a measurement number of times, which has been derived from a characteristic of the wireless station that is an object of positioning, or a characteristic of the plurality of the wireless stations, or a characteristic of a combination of the wireless station that is an object of positioning and the plurality of the wireless stations, stored correspondingly to each other; and a means for receiving identification information of the wireless station that is an object of positioning, or identification information of the plurality of the wireless stations, for retrieving necessary measurement number-of-times conclusion information corresponding to this identification information from the database, and for deciding the measurement number of times based upon this necessary measurement number-of-times conclusion information.

The second invention for solving the above-mentioned problem, which is a positioning system for measuring a communication situation between a wireless station that is an object of positioning and each of a plurality of wireless stations other than the wireless station that is an object of positioning, thereby to specify a position of the wireless station that is an object of positioning, is characterized in including: a database having a first table, which has identification information of the wireless station and group information, being information associated with a group of which a characteristic resembles that of the wireless station, caused to correspond to each other, and a second table, which has the group information and necessary measurement number-of-times conclusion information caused to correspond to each other, filed; and a means for receiving identification information of the wireless station that is an object of positioning, or identification information of the plurality of the wireless stations, for retrieving group information corresponding to this identification information from the first table, for retrieving necessary measurement number-of-times conclusion information corresponding to this group information from the second table, and for deciding a measurement number of times based upon this necessary measurement number-of-times conclusion information.

The third invention for solving the above-mentioned problem is characterized in that, in the above-mentioned second invention, the group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

The fourth invention for solving the above-mentioned problem is characterized in, in one of the above-mentioned second and third inventions, including a means for acquiring MIB information, thereby to acquire the group information.

The fifth invention for solving the above-mentioned problem is characterized in that, in one of the above-mentioned first to fourth inventions, the necessary measurement number-of-times conclusion information is a measurement number of times.

The sixth invention for solving the above-mentioned problem is characterized in that, in one of the above-mentioned first to fourth inventions, the necessary measurement number-of-times conclusion information is a standard deviation of a dispersion in an internal process delay in the wireless station that is an object positioning or the other wireless station.

The seventh invention for solving the above-mentioned problem is characterized in, in one of the above-mentioned first to sixth inventions, including a means for updating necessary measurement number-of-times conclusion information based upon an acquired measurement result.

The eighth invention for solving the above-mentioned problem is characterized in that, in the above-mentioned seventh invention, the means for updating necessary measurement number-of-times conclusion information performs an operational process weighted with a total measurement number of times for the necessary measurement number-of-times conclusion information and the measurement result, thereby to update the necessary measurement number-of-times conclusion information.

The ninth invention for solving the above-mentioned problem is characterized in that, in the above-mentioned seventh invention, the means for updating necessary measurement number-of-times conclusion information performs an operational process weighted with a total measurement number of times for the necessary measurement number-of-times conclusion information, the acquired measurement result, and a past measurement result, thereby to update the necessary measurement number-of-times conclusion information.

The tenth invention for solving the above-mentioned problem is characterized in that, in one of the above-mentioned first to ninth inventions, the measurement of the communication situation is a measurement of a radio wave propagation time.

The eleventh invention for solving the above-mentioned problem is characterized in that, in one of the above-mentioned first to tenth inventions, the plurality of the wireless stations perform the measurement of the communication situation.

The twelfth invention for solving the above-mentioned problem is characterized in that, in one of the above-mentioned first to tenth inventions, the wireless station that is an object of positioning performs the measurement of the communication situation.

The thirteenth invention for solving the above-mentioned problem is characterized in that, in one of the above-mentioned first to twelfth inventions, the wireless station performing the measurement of the communication situation is a wireless base station.

The fourteenth invention for solving the above-mentioned problem is characterized in that, in one of the above-mentioned first to twelfth inventions, the wireless station performing the measurement of the communication situation is a wireless terminal station.

The fifteenth invention for solving the above-mentioned problem is characterized in that, in one of the above-mentioned first to fourteenth inventions, the decision of the measurement number of times of the communication situation is performed by a positioning server having a connection with each of the plurality of the wireless stations via a network.

The sixteenth invention for solving the above-mentioned problem is characterized in that, in one of the above-mentioned first to fourteenth inventions, the decision of the measurement number of times of the communication situation is performed by the plurality of the wireless stations.

The seventeenth invention for solving the above-mentioned problem is characterized in that, in one of the above-mentioned first to fourteenth inventions, the decision of the measurement number of times of the communication situation is performed by the wireless station that is an object of positioning.

The eighteenth invention for solving the above-mentioned problem is characterized in that, in one of the above-mentioned first to seventeenth inventions, the necessary measurement number-of-times conclusion information is information prepared by taking into consideration the characteristic of the wireless station that is an object of positioning, or the characteristic of the wireless station other than the wireless station that is an object of positioning, or the characteristic of a combination of the wireless station that is an object of positioning and the wireless station other than the wireless station that is an object of positioning, and a positioning quality that is requested.

The nineteenth invention for solving the above-mentioned problem is characterized in that, in the above-mentioned eighteenth invention, the quality of the positioning is positioning precision information.

The twentieth invention for solving the above-mentioned problem is characterized in that, in the above-mentioned eighteenth invention, the quality of the positioning is use application information.

The twenty-first invention for solving the above-mentioned problem is characterized in that, in one of the above-mentioned first to seventeenth inventions, the identification information of the wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

The twenty-second invention for solving the above-mentioned problem, which is a positioning system for measuring a communication situation between a wireless station that is an object of positioning and each of a plurality of wireless stations other than the wireless station that is an object of positioning, thereby to specify a position of the wireless station that is an object of positioning, is characterized in including a means for deciding a measurement number of times of the communication situation based upon a characteristic of the wireless station that is an object of positioning, or a characteristic of the plurality of the wireless stations, or a characteristic of a combination of the wireless station that is an object of positioning and the plurality of the wireless stations.

The twenty-third invention for solving the above-mentioned problem, which is a positioning server for deciding a measurement number of times of a communication situation in a positioning system for measuring a communication situation between a wireless station that is an object of positioning and each of a plurality of wireless stations other than the wireless station that is an object of positioning, thereby to specify a position of the wireless station that is an object of positioning, is characterized in including: a database having identification information of the wireless station that is an object of positioning, or identification information of the plurality of the wireless stations and necessary measurement number-of-times conclusion information for drawing a conclusion on the measurement number of times, which has been derived from a characteristic of the wireless station that is an object of positioning, or a characteristic of the plurality of the wireless stations, or a characteristic of a combination of the wireless station that is an object of positioning and the plurality of the wireless stations, stored correspondingly to each other; and a means for receiving identification information of the wireless station that is an object of positioning, or identification information of the plurality of the wireless stations, for retrieving necessary measurement number-of-times conclusion information corresponding to this identification information from the database, and for deciding the measurement number of times based upon this necessary measurement number-of-times conclusion information.

The twenty-fourth invention for solving the above-mentioned problem, which is a positioning server for deciding a measurement number of times of a communication situation in a positioning system for measuring a communication situation between a wireless station that is an object of positioning and each of a plurality of wireless stations other than the wireless station that is an object of positioning, thereby to specify a position of the wireless station that is an object of positioning, is characterized in including: a database having a first table, which has identification information of the wireless station and group information, being information associated with a group of which a characteristic resembles that of the wireless station, caused to correspond to each other, and a second table, which has the group information and necessary measurement number-of-times conclusion information caused to correspond to each other, filed; and a means for receiving identification information of the wireless station that is an object of positioning, or identification information of the plurality of the wireless stations, for retrieving group information corresponding to this identification information from the first table, for retrieving necessary measurement number-of-times conclusion information corresponding to this group information from the second table, and for deciding the measurement number of times based upon this necessary measurement number-of-times conclusion information.

The twenty-fifth invention for solving the above-mentioned problem is characterized in, in the above-mentioned twenty-fourth invention, the group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

The twenty-sixth invention for solving the above-mentioned problem is characterized in, in one of the above-mentioned twenty-fourth and twenty-fifth inventions, including a means for acquiring MIB information, thereby to acquire the group information.

The twenty-seventh invention for solving the above-mentioned problem is characterized in that, in one of the above-mentioned twenty-third to twenty-sixth inventions, the necessary measurement number-of-times conclusion information is a measurement number of times.

The twenty-eighth invention for solving the above-mentioned problem is characterized in that, in one of the above-mentioned twenty-third to twenty-sixth inventions, the necessary measurement number-of-times conclusion information is a standard deviation of an dispersion in an internal process delay in the wireless station that is an object of positioning or the other wireless station.

The twenty-ninth invention for solving the above-mentioned problem is characterized in, in one of the above-mentioned twenty-third to twenty-sixth inventions, including a means for updating the necessary measurement number-of-times conclusion information based upon an acquired measurement result.

The thirtieth invention for solving the above-mentioned problem is characterized in that, in the above-mentioned twenty-third invention, the means for updating necessary measurement number-of-times conclusion information performs an operational process weighted with a total of measurement number of times for the necessary measurement number-of-times conclusion information and the measurement result, thereby to update the necessary measurement number-of-times conclusion information.

The thirty-first invention for solving the above-mentioned problem is characterized in that, in the above-mentioned twenty-third invention, the means for updating necessary measurement number-of-times conclusion information performs an operational process weighted with a total measurement number of times for the necessary measurement number-of-times conclusion information, the acquired measurement result, and a past measurement result, thereby to update the necessary measurement number-of-times conclusion information.

The thirty-second invention for solving the above-mentioned problem is characterized in that, in one of the above-mentioned twenty-third to thirty-first inventions, the measurement of the communication situation is a measurement of a radio wave propagation time.

The thirty-third invention for solving the above-mentioned problem is characterized in that, in one of the above-mentioned twenty-third to thirty-second inventions, the positioning server has a connection with each of the plurality of the wireless stations via a network.

The thirty-fourth invention for solving the above-mentioned problem is characterized in that, in one of the above-mentioned twenty-third to thirty-third inventions, the necessary measurement number-of-times conclusion information is information prepared by taking into consideration a characteristic of the wireless station that is an object of positioning, or a characteristic of the wireless station other than the wireless station that is an object of positioning, or a characteristic of a combination of the wireless station that is an object of positioning and the wireless station other than the wireless station that is an object of positioning, and a quality of positioning that is requested.

The thirty-fifth invention for solving the above-mentioned problem is characterized in that, in the above-mentioned thirty-fourth invention, the quality of positioning is positioning precision information.

The thirty-sixth invention for solving the above-mentioned problem is characterized in that, in the above-mentioned thirty-fourth invention, the quality of the positioning is use application information.

The thirty-seventh invention for solving the above-mentioned problem is characterized in that, in one of the above-mentioned twenty-third to thirty-sixth inventions, the identification information of the wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

The thirty-eighth invention for solving the above-mentioned problem, which is a program for causing an information processing unit to perform a process of deciding a measurement number of times of a communication situation in a positioning system for measuring a communication situation between a wireless station that is an object of positioning and each of a plurality of wireless stations other than the wireless station that is an object of positioning, thereby to specify a position of the wireless station that is an object of positioning, is characterized in causing the information processing unit to function as a means for receiving identification information of the wireless station that is an object of positioning, or identification information of the plurality of the wireless stations, for retrieving necessary measurement number-of-times conclusion information corresponding to the received identification information from a database having identification information of the wireless station that is an object of positioning, or identification information of the plurality of the wireless stations and necessary measurement number-of-times conclusion information for drawing a conclusion on the measurement number of times, which has been derived from a characteristic of the wireless station that is an object of positioning, or a characteristic of the plurality of the wireless stations, or a characteristic of a combination of the wireless station that is an object of positioning and the plurality of the wireless stations, stored correspondingly to each other, and for deciding the measurement number of times based upon this necessary measurement number-of-times conclusion information.

The thirty-ninth invention for solving the above-mentioned problem, which is a program for causing an information processing unit to perform a process of deciding a measurement number of times of a communication situation in a positioning system for measuring a communication situation between a wireless station that is an object of positioning and each of a plurality of wireless stations other than the wireless station that is an object of positioning, thereby to specify a position of the wireless station that is an object of positioning, is characterized in causing the information processing unit to function as a means for receiving identification information of the wireless station that is an object of positioning, or identification information of the plurality of the wireless stations, for retrieving group information corresponding to this identification information from a table having the identification information of the wireless station and group information, being information associated with a group of which a characteristic resembles that of the wireless station, caused to correspond to each other, for retrieving necessary measurement number-of-times conclusion information corresponding to this group information from a table having the group information and the necessary measurement number-of-times conclusion information caused to correspond to each other, and for deciding the measurement number of times based upon this necessary measurement number-of-times conclusion information.

The fortieth invention for solving the above-mentioned problem is characterized in that, in the above-mentioned thirty-ninth invention, the group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

The forty-first invention for solving the above-mentioned problem is characterized in that, in one of the above-mentioned thirty-ninth and fortieth inventions, the program causes the information processing unit to function as a means for acquiring MIB information, thereby to acquire the group information.

The forty-second invention for solving the above-mentioned problem is characterized in that, in one of the above-mentioned thirty-eighth to forty-first inventions, the necessary measurement number-of-times conclusion information is a measurement number of times.

The forty-third invention for solving the above-mentioned problem is characterized in that, in one of the above-mentioned thirty-eighth to forty-first inventions, the necessary measurement number-of-times conclusion information is a standard deviation of a dispersion in an internal process delay in the wireless station that is an object of positioning or the other wireless station.

The forty-fourth invention for solving the above-mentioned problem is characterized in, in one of the above-mentioned thirty-eighth to forty-third inventions, the program causes the information processing unit to function as a means for updating the necessary measurement number-of-times conclusion information of the database based upon an acquired measurement result.

The forty-fifth invention for solving the above-mentioned problem is characterized in that, in one of the above-mentioned thirty-eighth to forty-fourth inventions, the program causes the information processing unit to function as a means for performing an operational process weighted with a total measurement number of times for the necessary measurement number-of-times conclusion information and a measurement result, thereby to update the necessary measurement number-of-times conclusion information of the database.

The forty-sixth invention for solving the above-mentioned problem is characterized in that, in one of the above-mentioned thirty-eighth to forty-fifth inventions, the program causes the information processing unit to function as a means for performing an operational process weighted with a total measurement number of times for the necessary measurement number-of-times conclusion information, an acquired measurement result, and a past measurement result, thereby to update the necessary measurement number-of-times conclusion information of the database.

The forty-seventh invention for solving the above-mentioned problem is characterized in that, in one of the above-mentioned thirty-eighth to forty-sixth inventions, the measurement of the communication situation is a measurement of a radio wave propagation time.

The forty-eighth invention for solving the above-mentioned problem is characterized in that, in one of the above-mentioned thirty-eighth to forty-seventh inventions, the information processing unit has a connection with each of the plurality of the wireless stations via a network.

The forty-ninth invention for solving the above-mentioned problem is characterized in that, in one of the above-mentioned thirty-eighth to forty-eighth inventions, the necessary measurement number-of-times conclusion information is information prepared by taking into consideration a characteristic of the wireless station that is an object of positioning, or a characteristic of the wireless station other than the wireless station that is an object of positioning, or a characteristic of a combination of the wireless station that is an object of positioning and the wireless station other than the wireless station that is an object of positioning, and a quality of positioning that is requested.

The fiftieth invention for solving the above-mentioned problem is characterized in that, in the above-mentioned forty-ninth invention, the quality of positioning is positioning precision information.

The fifty-first invention for solving the above-mentioned problem is characterized in that, in the above-mentioned forty-ninth invention, the quality of positioning is use application information.

The fifty-second invention for solving the above-mentioned problem is characterized in that, in one of the above-mentioned thirty-eighth to fifty-first inventions, the identification information of the wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

The fifty-third invention for solving the above-mentioned problem, which is a method of deciding a measurement number of times in a positioning system for measuring a communication situation between a wireless station that is an object of positioning and each of a plurality of wireless stations other than the wireless station that is an object of positioning, thereby to specify a position of the wireless station that is an object of positioning, is characterized in including a step of deciding the measurement number of times of the communication situation based upon a characteristic of the wireless station that is an object of positioning, or a characteristic of the plurality of the wireless stations, or a characteristic of a combination of the wireless station that is an object of positioning and the plurality of the wireless stations.

The fifty-fourth invention for solving the above-mentioned problem is characterized in that, in the above-mentioned fifty-third invention, including the steps of: pre-storing identification information of the wireless station that is an object of positioning, or identification information of the plurality of the wireless stations and necessary measurement number-of-times conclusion information for drawing a conclusion on the measurement number of times correspondingly to each other, which has been derived from the characteristic of the wireless station that is an object of positioning, or the characteristic of the plurality of the wireless stations, or the characteristic of a combination of the wireless station that is an object of positioning and the plurality of the wireless stations; and retrieving necessary measurement number-of-times conclusion information corresponding to the received identification information of the wireless station that is an object of positioning, or to the received identification information of the plurality of the wireless stations to decide the measurement number of times based upon this necessary measurement number-of-times conclusion information.

The fifty-fifth invention for solving the above-mentioned problem is characterized in that, in the above-mentioned fifty-third invention, including the steps of: pre-storing identification information of the wireless station and the necessary measurement number-of-times conclusion information via group information, being information associated with a group of which the characteristic resembles that of the wireless station, correspondingly to each other; and retrieving necessary measurement number-of-times conclusion information corresponding to the received identification information of the wireless station that is an object of positioning, or to the received identification information of the plurality of the wireless stations via the group information to decide the measurement number of times based upon this necessary measurement number-of-times conclusion information.

The fifty-sixth invention for solving the above-mentioned problem is characterized in, in the above-mentioned fifty-fifth invention, the group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

The fifty-seventh invention for solving the above-mentioned problem is characterized in, in one of the above-mentioned fifty-fifth and fifty-sixth inventions, including a step of acquiring MIB information, thereby to acquire the group information.

The fifty-eighth invention for solving the above-mentioned problem is characterized in that, in one of the above-mentioned fifty-third to fifty-seventh inventions, the necessary measurement number-of-times conclusion information is a measurement number of times.

The fifty-ninth invention for solving the above-mentioned problem is characterized in that, in one of the above-mentioned fifty-third to fifty-seventh inventions, the necessary measurement number-of-times conclusion information is a standard deviation of a dispersion in an internal process delay in the wireless station that is an object of positioning or the other wireless station.

The sixtieth invention for solving the above-mentioned problem is characterized in, in one of the above-mentioned fifty-third to fifty-ninth inventions, including a step of updating the necessary measurement number-of-times conclusion information based upon an acquired measurement result.

The sixty-first invention for solving the above-mentioned problem is characterized in that, in the above-mentioned sixtieth invention, including a step of performing an operational process weighted with a total measurement number of times for the necessary measurement number-of-times conclusion information and the measurement result, thereby to update the necessary measurement number-of-times conclusion information.

The sixty-second invention for solving the above-mentioned problem is characterized in that, in the above-mentioned sixtieth invention, including a step of performing an operational process weighted with a total measurement number of times for the necessary measurement number-of-times conclusion information, the acquired measurement result, and a past measurement result, thereby to update the necessary measurement number-of-times conclusion information.

The sixty-third invention for solving the above-mentioned problem is characterized in that, in one of the above-mentioned fifty-third to sixty-second inventions, the measurement of communication situation is a measurement of a radio wave propagation time.

The sixty-fourth invention for solving the above-mentioned problem is characterized in that, in one of the above-mentioned fifty-third to sixty-third inventions, the plurality of the wireless stations perform the measurement of the communication situation.

The sixty-fifth invention for solving the above-mentioned problem is characterized in that, in one of the above-mentioned fifty-third to sixty-third inventions, the wireless station that is an object of positioning performs the measurement of the communication situation.

The sixty-sixth invention for solving the above-mentioned problem is characterized in that, in one of the above-mentioned fifty-third to sixty-fifth inventions, the wireless station performing the measurement of the communication situation is a wireless base station.

The sixty-seventh invention for solving the above-mentioned problem is characterized in that, in one of the above-mentioned fifty-third to sixty-fifth inventions, the wireless station performing the measurement of the communication situation is a wireless terminal station.

The sixty-eighth invention for solving the above-mentioned problem is characterized in that, in one of the above-mentioned fifty-third to sixty-fifth inventions, the decision of the measurement number of times of the communication situation is performed by a positioning server having a connection with each of the plurality of the wireless stations via a network.

The sixty-ninth invention for solving the above-mentioned problem is characterized in that, in one of the above-mentioned fifty-third to sixty-eighth inventions, the decision of the measurement number of times of the communication situation is performed by the plurality of the wireless stations.

The seventieth invention for solving the above-mentioned problem is characterized in that, in one of the above-mentioned fifty-third to sixty-ninth inventions, the decision of the measurement number of times of the communication situation is performed by the wireless station that is an object of positioning.

The seventy-first invention for solving the above-mentioned problem is characterized in that, in one of the above-mentioned fifty-third to seventieth inventions, the necessary measurement number-of-times conclusion information is information prepared by taking into consideration the characteristic of the wireless station that is an object of positioning, or the characteristic of the wireless station other than the wireless station that is an object of positioning, or the characteristic of a combination of the wireless station that is an object of positioning and the wireless station other than the wireless station that is an object of positioning, and a quality of positioning that is requested.

The seventy-second invention for solving the above-mentioned problem is characterized in that, in the above-mentioned seventy-first invention, the quality of positioning is positioning precision information.

The seventy-third invention for solving the above-mentioned problem is characterized in that, in the above-mentioned seventy-first invention, the quality of positioning is use application information.

The seventy-fourth invention for solving the above-mentioned problem is characterized in that, in one of the above-mentioned fifty-third to seventy-third inventions, the identification information of the wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

The seventy-fifth invention for solving the above-mentioned problem, which a positioning system for measuring a communication situation between a wireless station that is an object of positioning and each of a plurality of wireless station other than the wireless station that is an object of positioning, thereby to specify a position of said wireless station that is an object of positioning, is characterized including a means for, based upon a set measurement number of times and a measurement result based upon the set measurement number of times, obtaining a new measurement number of times to perform the positioning again by this measurement number of times.

The seventy-sixth invention for solving the above-mentioned problem, which is a method of deciding a measurement number of times in a positioning system for measuring a communication situation between a wireless station that is an object of positioning and each of a plurality of wireless station other than the wireless station that is an object of positioning, thereby to specify a position of the wireless station that is an object of positioning, is characterized in including a step of, based upon a set measurement number of times and a measurement result based upon the set measurement number of times, deciding a new measurement number of times.

The seventy-seventh invention for solving the above-mentioned problem is a positioning server that is characterized in; based upon a measurement result of a communication situation between each of a plurality of wireless stations having a connection therewith and a wireless station that is a subordinate of the plurality of the wireless station, specifying a position of the wireless station that is an subordinate; and deciding a measurement number of times of the communication situation based upon a characteristic of the wireless station that is an subordinate, or a characteristic of the plurality of the wireless stations, or a characteristic of a combination of the wireless station that is an subordinate and the plurality of the wireless stations.

The seventy-eighth invention for solving the above-mentioned problem is a wireless station that is characterized in; receiving a positioning request including information associated with a characteristic of a wireless station that is a subordinate thereof from a server having a connection therewith to measure a distance with the wireless station that is a subordinate, and to send this measured distance to the server in which a position of a terminal, being a subordinate, is specified; and deciding a measurement number of times of the distance based upon the characteristic of the wireless station that is a subordinate.

The seventy-ninth invention for solving the above-mentioned problem is a wireless station that is characterized in: receiving a positioning request, which includes a characteristic of its own wireless station and a requested positioning quality, from a server to measure distances with a plurality of the wireless stations each of which is a connection destination, to send the measured distances to the server having a connection to the plurality of the wireless stations, in which a position of its own wireless station is specified; and deciding a measurement number of times of the distance based upon the characteristic of its own wireless station and the requested positioning quality.

In the present invention, the apparatus for deciding the measurement number of times of the communication situation such as the positioning server is provided with a database having necessary measurement number-of-times conclusion information, which becomes conclusion information for deciding the measurement number of times, and positioning-object wireless terminal station information for identifying an object of positioning caused to correspond to each other.

Herein, the so-called necessary measurement number-of-times conclusion information, which is information necessary for deciding the appropriate measurement number of times based upon characteristics (a process speed of a processing circuit, a dispersion in an internal process delay, etc.) of the wireless terminal that becomes an object of positioning, includes, for example, a standard deviation of a dispersion in an internal process delay of the wireless terminal that is an object of positioning. Further, it includes the measurement number of times having the characteristic of the wireless terminal, which is an object of positioning, taken into consideration.

Further, the so-called positioning-object wireless terminal station information, which is information for identifying an object of positioning, includes, for example, a user mane, being personal information, a personal ID, a PC name, an MAC address of the positioning-object wireless terminal station, an IP address, an arbitrary wireless station ID allocated to each terminal, etc. Additionally, group information of the positioning-object terminal may be employed for the positioning-object wireless terminal station information. Herein, the so-called group information, which is information associated with similar products resembling the positioning-object wireless terminal station, includes model number information of the product of the wireless terminal station, model number information of an IC for wireless communication mounted onto the wireless terminal station, manufacturer information of an IC for wireless communication mounted onto the wireless terminal station, wireless communication technique information to which the IC for wireless communication mounted onto the wireless terminal station corresponds, etc.

The positioning server etc. deciding the measurement number of times receives the positioning-object wireless terminal station information of the terminal that becomes an object of positioning, retrieves necessary measurement number-of-times conclusion information corresponding to the positioning-object wireless terminal station information from the database, and decides the measurement number of times based upon this necessary measurement number-of-times conclusion information.

Further, the necessary measurement number-of-times conclusion information may be prepared by taking information such as a positioning precision that is requested into consideration in addition to the characteristic of the wireless terminal that becomes an object of positioning.

In the present invention, in specifying a position of the wireless station, the measurement number of times of the communication situation is decided based upon the characteristic of the wireless station that is an object of positioning, or the characteristic of the plurality of the wireless stations, or the characteristic of a combination of the wireless station that is an object of positioning and the plurality of the wireless stations. This makes it possible to provide stabilized positioning environments because the useless measurement can be avoided for the wireless station demanding less measurement number of times necessary for satisfying the requested positioning precision, and the situation in which the requested positioning precision is not satisfied can be avoided for the wireless station demanding many necessary-measurement number of times.

## [EFFECTS OF THE INVENTION]

The present invention exhibits an excellent effect that the positioning time can be curtailed for the wireless station having a small dispersion in the characteristic such as the circuit delay time because the measurement number of times can be retrenched, and a deterioration in the positioning precision can be effectively improved for the wireless station having a large dispersion in the circuit delay time. The reason is that the measurement number of times is controlled wireless station by wireless station, for example, by taking the characteristic of the wireless station such as a dispersion of the circuit delay time into consideration.

Further, in accordance with the present invention, it is possible to provide the positioning having a high precision because the measurement number of times is controlled by taking the positioning precision as well into consideration in addition to the characteristic of the wireless station.

In addition hereto, in accordance with the present invention, deciding the appropriate measurement number of times corresponding to the characteristic of the wireless station enables a retrenchment in the traffic for a measurement request and a curtailment in the delay time needed for the measurement process. The reason is that the number of times of re-measurement, which is performed in the case that the requested positioning precision has not been satisfied, can be effectively reduced and the number of times of transmission/reception of a packet for re-measurement can be reduced.

**[BRIEF DESCRIPTION OF THE DRAWINGS]**

[Fig. 1] Fig. 1 is a view illustrating one example of the positioning system to be employed in the present invention.

[Fig. 2] Fig. 2 is a sequence illustrating a process procedure of the positioning process in the case of performing the measurement from the measurement-performance wireless base station.

[Fig. 3] Fig. 3 is a view illustrating a method of specifying a position that is employed for a GPS positioning.

[Fig. 4] Fig. 4 is a view illustrating a method of specifying a position that is employed for a hyperbolic navigation.

[Fig. 5] Fig. 5 is a view illustrating a configuration of the positioning server that is employed in the present invention.

[Fig. 6] Fig. 6 is a view illustrating one example of the table that is filed into a database section.

[Fig. 7] Fig. 7 is a view illustrating one example of the table that is filed into a database section.

[Fig. 8] Fig. 8 is a view illustrating a flowchart of the process inside the positioning server.

[Fig. 9] Fig. 9 is a flowchart illustrating a procedure for deciding the measurement number of times responding to the positioning-object wireless terminal.

[Fig. 10] Fig. 10 is a flowchart illustrating a procedure for deciding the measurement number of times responding to group information of the positioning-object wireless terminal.

[Fig. 11] Fig. 11 is a view illustrating a configuration of the positioning server that is employed in the present invention.

[Fig. 12] Fig. 12 is a view illustrating one example of the table that is filed into the database section.

[Fig. 13] Fig. 13 is a flowchart illustrating a procedure for deciding the measurement number of times responding to the group information of the positioning-object wireless terminal.

[Fig. 14] Fig. 14 is a flowchart of the process in the case of employing the necessary measurement number-of-times conclusion information of the positioning-object wireless terminal station and the necessary measurement number-of-times conclusion information of the measurement-performance wireless base station to decide the measurement number of times.

[Fig. 15] Fig. 15 is a configuration view of the wireless base station in the case of having a functional section for deciding the measurement number of times.

[Fig. 16] Fig. 16 is a process sequence in the case of deciding the measurement number of times in the measurement-performance wireless base station.

[Fig. 17] Fig. 17 is a process sequence in the case of having a learning function of a database section 202.

[Fig. 18] Fig. 18 is a configuration view of the positioning server having a learning function of the database section 202.

[Fig. 19] Fig. 19 is a flowchart of the process inside the positioning server shown in Fig. 18.

[Fig. 20] Fig. 20 is a flowchart of a step 317, being a process of a database information learning-function section 213.

[Fig. 21] Fig. 21 is a flowchart of the step 317, being a process of the database information learning-function section 213.

[Fig. 22] Fig. 22 is a process sequence in the case of performing the measurement from a wireless terminal station 60 that is an object of positioning.

[Fig. 23] Fig. 23 is a flowchart in the case of measuring the radio wave propagation time from wireless terminal station.

[Fig. 24] Fig. 24 is a configuration view of the wireless terminal station in the case of having a functional section for deciding the measurement number of times.

[Fig. 25] Fig. 25 is a process sequence in the case of deciding the measurement number of times in the positioning-object wireless terminal station.

[Fig. 26] Fig. 26 is a process sequence in the case of specifying a position of the terminal in the positioning-object wireless terminal station.

[Fig. 27] Fig. 27 is a process sequence in the case of deciding the measurement number of times and of specifying a position in the positioning-object wireless terminal station.

[Fig. 28] Fig. 28 is a process sequence in the case of employing a wireless terminal station 60, being an object of positioning, and wireless base stations 30, 40 and 50 to perform the measurement.

[Fig. 29] Fig. 29 is a view for explaining the conventional art.

[Fig. 30] Fig. 30 is a view of a table of the group information and the necessary measurement number-of-times conclusion information.

[DESCRIPTION OF NUMERALS]

| | |
|---|---|
| 10 | positioning request source |
| 20 | positioning server |
| 30, 40 and 50 | measurement-performance wireless base stations |
| 60 | positioning-object wireless terminal station |
| 70 | wireless base station |
| 80 | wireless terminal station |
| 90 | network |
| 200 and 210 | positioning process controllers |
| 201 and 211 | necessary measurement number-of-times decision function sections |
| 202 and 212 | database sections |
| 213 database | information learning-function section |

[BEST MODE FOR CARRYING OUT THE INVENTION]

Next, a first embodiment of the present invention will be explained.

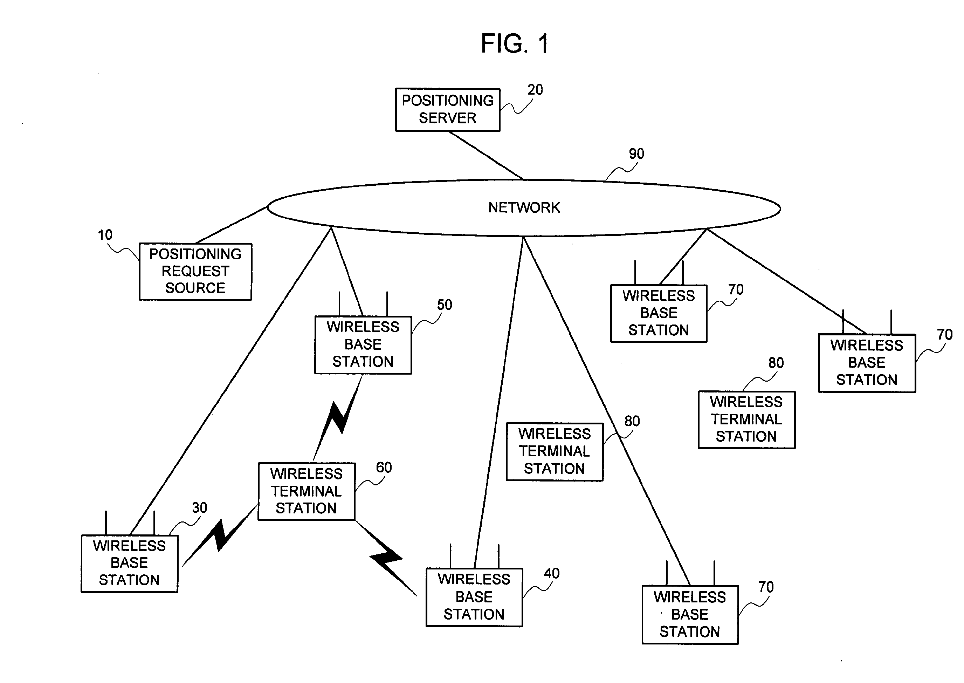

In Fig. 1, the positioning system in the first embodiment is shown.

This system is configured of a positioning request source 10 for requesting the positioning, a positioning server 20 for processing the positioning request, a plurality of wireless base stations 70 in addition to a wireless base station 30, a wireless bases station 40 and a wireless base station 50, a wireless terminal station 60, a plurality of wireless terminal stations 80 other than it, and a network 90.

Next, an operation in such a configuration will be explained.

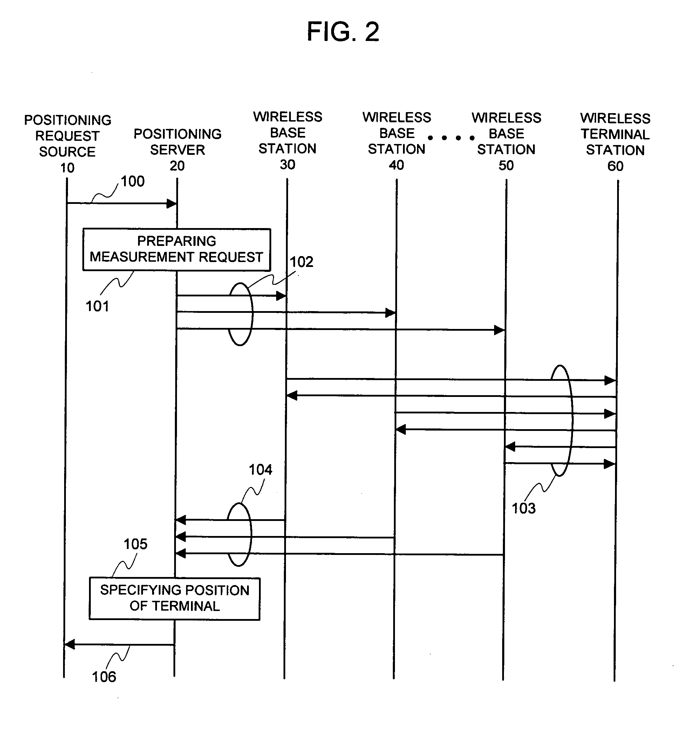

Herein, an operational example in the case that acquisition of positional information of the wireless terminal station 60 is requested of the positioning server 20 by the positioning request source 10, and each of the wireless base station 30, the wireless bases station 40, and the wireless base station 50 is selected as a measurement-performance base station will be explained. The entirety of the process sequence in this situation is shown in Fig. 2.

When the positioning server 20 receives the positioning request information from the positioning request source 10 requesting the positioning (step 100), it prepares the measurement request information (step 101). In the process of preparing the measurement request information in the step 101, selection of the measurement-performance wireless base station, calculation of the number of times of the measurement that is performed in each wireless base station, and so on are carried out. And, the positioning server 20 transmits the measurement request information including measurement number-of-times information to each wireless base station selected as the measurement-performance base station in the step 101 (step 102).

Each of the measurement-performance wireless base stations 30, 40 and 50 having received the measurement request information performs the measurement for the wireless terminal station 60, being an object of positioning, according to the measurement number-of-times information that is included in the measurement request information (step 103), and transmits a measurement result to the positioning server 20 (step 104).

The positioning server 20 employs the measurement result received from each of the measurement-performance wireless base stations 30, 40 and 50 to specify a position of the wireless terminal station 60 (step 105). Thereafter, it transmits the specified positional information of the wireless terminal station 60 to the positioning request source 10 (step 106).

Herein, the positioning request information, which is transmitted from the positioning request source 10 in the step 100 of Fig. 2, is information including positioning-object wireless terminal station information for specifying the wireless terminal station that is an object of positioning, requested positioning quality information associated with a quality of positioning, etc.

It is thinkable that a user mane, being personal information, a personal ID, a PC name, an MAC address of the positioning-object wireless terminal station, an IP address, an arbitrary wireless station ID allocated to each terminal, etc. are employed for the positioning-object wireless terminal station information. The method of causing each user or a network administrator to input these kinds of personal information is thinkable. Further, group information of the positioning-object wireless terminal station 60 may be employed for the positioning-object wireless terminal station information. Herein, the so-called group information, which is information associated with similar products resembling the positioning-object wireless terminal station, includes model number information of the product of the wireless terminal station, model number information of an IC for wireless communication mounted onto the wireless terminal station, manufacturer information of an IC for wireless communication mounted onto the wireless terminal station, wireless communication technique information to which the IC for wireless communication mounted onto the wireless terminal station corresponds, etc. The method of drawing a conclusion by acquiring MIB information packaged into the wireless terminal station 60 is thinkable as a method of drawing a conclusion on these kinds of information; however, the method of causing the user to pre-register these kinds of information for compiling them into a database, or the like is acceptable.

Further, a positioning precision of the positional information that is requested, application information that is used, etc. may be employed for the requested positioning quality information. Herein, as an example of information that is described in the application information to be used, urgent notification, a pursuit of a person, a navigation, an appointment, etc. are thinkable, and it is thinkable that the positioning precision that each application demands is pre-registered to the positioning server 20, and so on.

Herein, one example of the method of specifying a position of the wireless terminal station 60 will be explained.

So as to specify a position of the wireless terminal station 60, upon receiving the measurement request information from the positioning server 20, each wireless base station performing a measurement measures a radio wave propagation time between its own station and the wireless terminal station 60 that is an object of positioning, and transmits it to the positioning server 20. Herein, the radio wave propagation time to be measured includes not only a one-way propagation time but also a round-trip propagation time between each wireless base station and the wireless terminal station 60.

Next, the positioning server 20 calculates distances between each wireless base station and the wireless terminal station 60 from the measured radio wave propagation time, respectively. And, finally, it operates the position of the wireless terminal station 60 from a relation of the calculated distance between each wireless base station and the wireless terminal station 60.

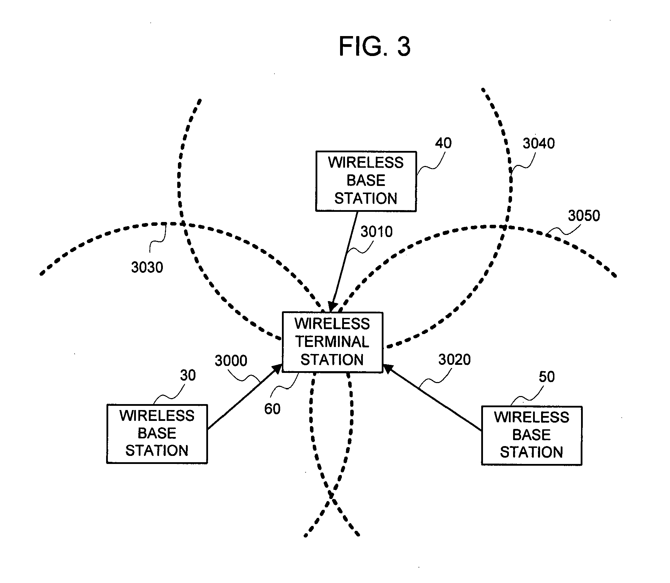

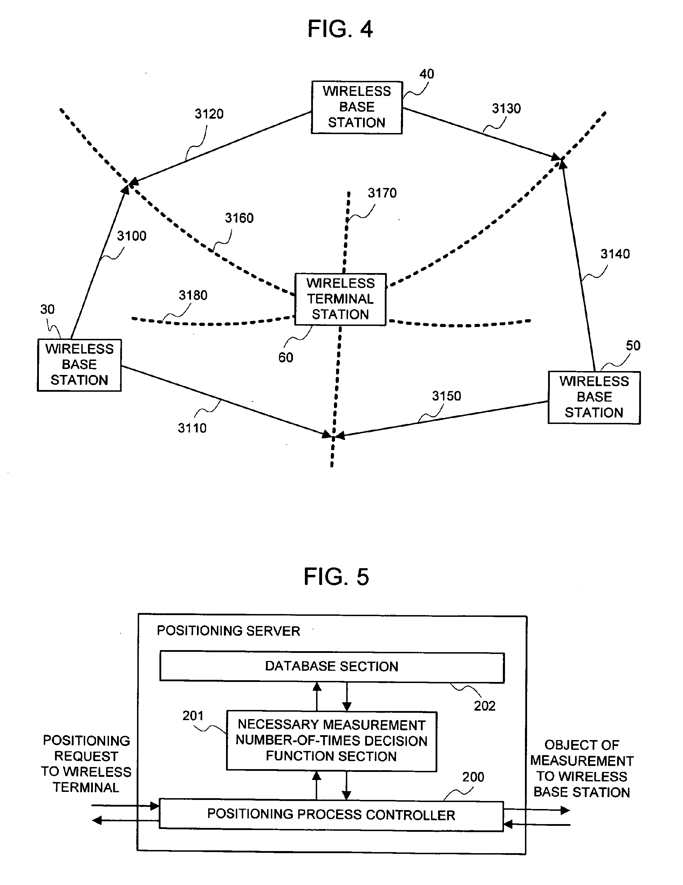

Herein, as a method of calculating the position, the method of, as shown in Fig. 3, obtaining an intersection point of circles each having a radius that is assumed to be a distance obtained from each of three wireless base stations, the method of, as shown in Fig. 4, employing a difference in distances from each wireless base station to the wireless terminal station 60 to draw hyperbolas for obtaining an intersection point thereof, and so on are thinkable.

In Fig. 3, the method is shown of obtaining an intersection point of circles of which a radius is a distance obtained from each of three wireless base stations.

Upon calculating distances 3000, 3010, and 3020 between each of the wireless base stations 30, 40 and 50, and the positioning-object wireless terminal station 60, it follows that an intersection point of the circles of which a radius is the distance 3000, the distance 3010 and the distance 3020, respectively, with a center at each of the wireless base station 30, 40, and 50 becomes a position of the positioning-object wireless terminal station 60.

In Fig. 4, the method is shown of employing a difference in distances from each wireless base station to the wireless terminal station 60 to draw hyperbolas for obtaining an intersection point thereof.

Upon calculating distances 3100, 3110, 3120, 3130, 3140, and 3150 between each of the wireless base stations 30, 40 and 50, and the positioning-object wireless terminal station 60, it follows that an intersection point of hyperbolas 3160, 3170 and 3180 depicted by employing each of the distances 3100, 3110, 3120, 3130, 3140, and 3150 with a reference point at each of the wireless base stations 30, 40, and 50 becomes a position of the positioning-object wireless terminal station 60.

Next, another method of specifying the position of the wireless terminal station 60 will be explained.

So as to specify the position of the wireless terminal station 60, at first, each wireless base station performing a measurement measures the time of having received a radio wave transmitted from the wireless terminal station 60 that is an object of positioning. Next, the positioning server 20 calculates a reception time difference between each of the wireless base station and the other from the radio wave reception time measured in each base station to convert it into a distance difference. And, it obtains an intersection point of the hyperbolas similarly to the case of Fig. 4, thereby to operate the position.

Next, the positioning server 20 will be explained. Fig. 5 is a view illustrating a configuration of the positioning server 20.

As shown in Fig. 5, the positioning server 20 is configured of a positioning process controller 200 for performing a process of preparing measurement request information based upon the positioning request information received from the positioning request source 10 to transmit the measurement request information to each wireless base station performing a measurement, and a process of operating the position of the wireless terminal station 60 from the measurement result, which is received from each wireless base station, to transmit positional information to the positioning request source 10, a necessary measurement number-of-times decision function section 201 for deciding measurement number of times based upon the positioning request information, and a database section 202 for retaining the necessary measurement number-of-times conclusion information.

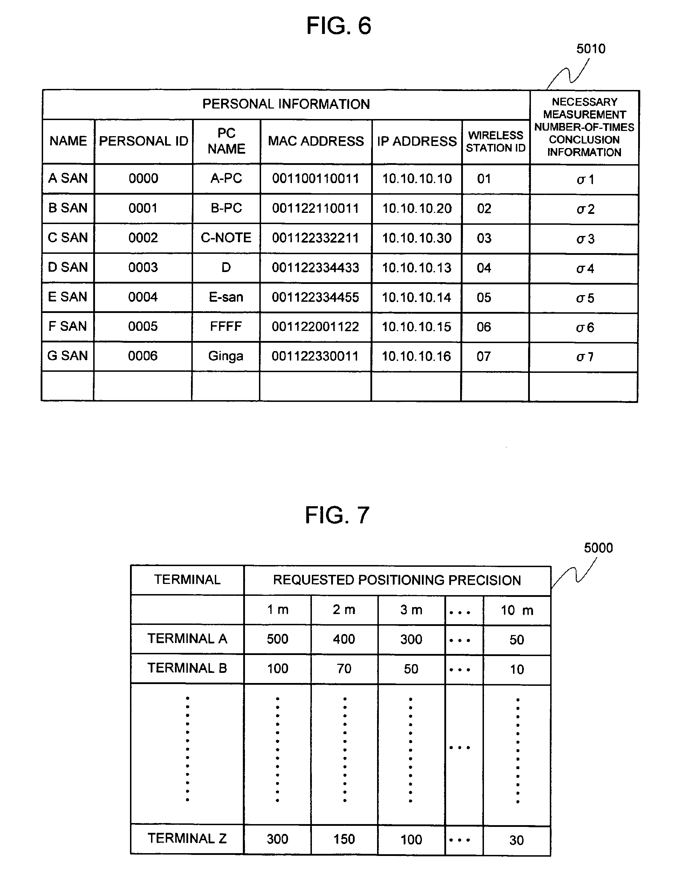

The database section 202 has a table of the necessary measurement number-of-times conclusion information filed, which has the foregoing positioning-object wireless terminal station information and the necessary measurement number-of-times conclusion information, which becomes conclusion information for deciding the measurement number of times, caused to correspond to each other. It is thinkable to assume the necessary measurement number-of-times conclusion information of the database section 202 to be, for example, a standard deviation of a dispersion in the internal delay process of the wireless terminal that is an object of positioning. In Fig. 6, one example is shown of a table 5010 associated with the necessary measurement number-of-times conclusion information filed in the database section 202. Additionally, in this embodiment, the standard deviation of a dispersion in the internal delay process of the wireless terminal was exemplified as the necessary measurement number-of-times conclusion information; however it is not limited hereto, and the measurement number of times having the characteristic of the wireless terminal, being an object of positioning, taken into consideration may be stored in the database section 202.

In addition hereto, the necessary measurement number-of-times conclusion information having the foregoing requested positioning quality information taken into consideration may be prepared. For example, the positioning precision is thinkable as an example of the requested positioning quality information, and the measurement number of times, which is decided by adding this positioning precision to the characteristic of the wireless terminal that is an object of positioning, may be employed as the necessary measurement number-of-times conclusion information. An example of the table in this case is shown in Fig. 7. In Fig. 7, the positioning-object wireless terminal station information and the measurement number of times having the characteristic of the wireless terminal that is an object of positioning and the positioning precision taken into consideration are stored correspondingly to each other.

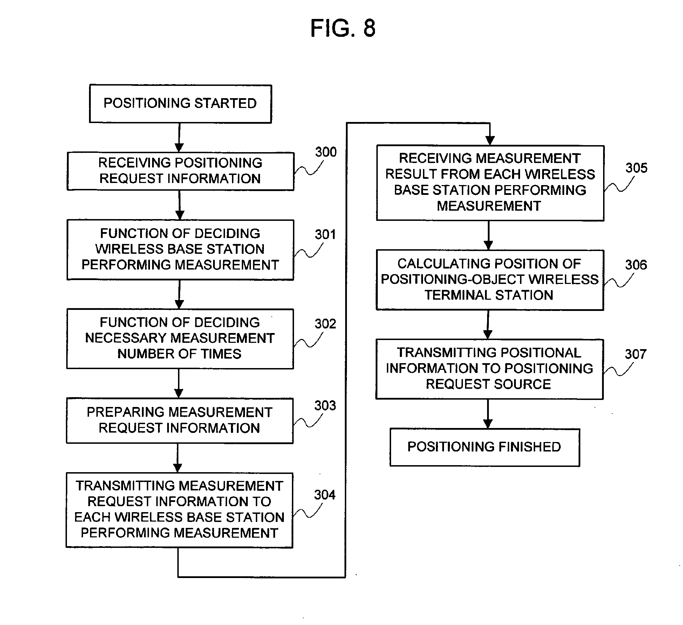

Next, an operation in the positioning server 20 will be explained. Fig. 8 illustrates a flowchart of the process inside the positioning server 20 shown in Fig. 5.

At first, when the positioning process controller 200 receives the positioning request information from the positioning request source 10 (step 300), it decides each wireless base station performing a measurement, of which the position is already known (step 301). At this time, the decision of the wireless base station is made with an arbitrary way; however, as one example, the wireless base station may be selected with the method of selecting the wireless station of which the measurement environment is excellent in a priority manner.

Next, the necessary measurement number-of-times decision function section 201 employs the positioning request information, and the necessary measurement number-of-times conclusion information, which the database section 202 retains, to decide the number of times of the measurement that is performed in each wireless base station performing a measurement (step 302). And, the positioning process controller 200 employs the information obtained in the step 301 and the step 302 to prepare the measurement request information (step 303), and transmits the measurement request information including the measurement number of times to the wireless base station 30, the wireless base station 40, and the wireless base station 50 that perform a measurement (step 304). Thereafter, when the positioning process controller 200 receives each measurement result from each wireless base station performing a measurement (step 305), it employs each measurement result to specify the position of the wireless terminal station 60 (step 306).

Finally, the positioning process controller 200 transmits the specified positional information of the wireless terminal station 60 to the positioning request source 10 (step 307).

Next, the process method of the necessary measurement number-of-times decision function in the step 302 will be explained.

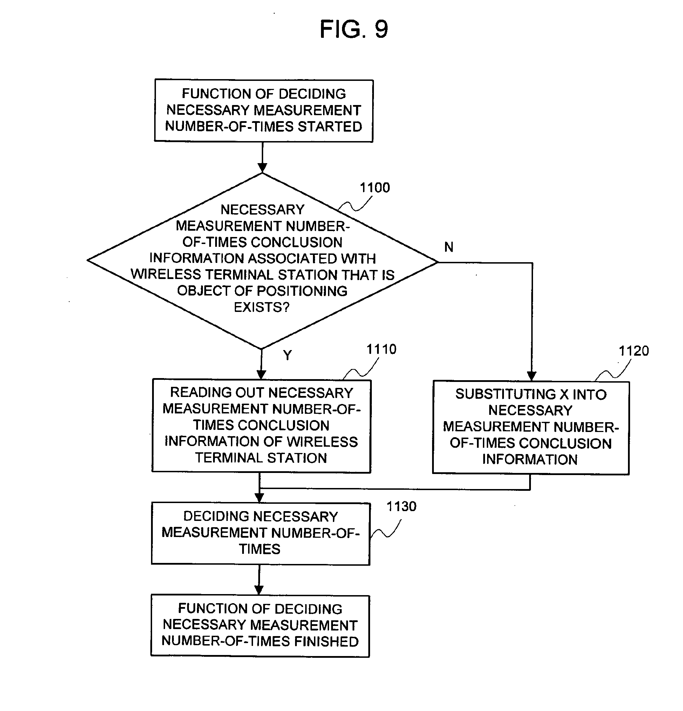

In fig. 9, a flowchart of the process that is performed in the step 302 is shown.

At first, the necessary measurement number-of-times decision function section 201 employs the positioning-object wireless terminal station information, which is included in the positioning request information received from the positioning request source 10, to confirm whether the necessary measurement number-of-times conclusion information associated with the wireless terminal station 60, being an wireless base station that is an object of positioning, is retained in the database section 202 (step 1100).

In the step 1100, in a case where it has been concluded that the necessary measurement number-of-times conclusion information associated with the wireless terminal station 60 is retained in the database section 202, the necessary measurement number-of-times decision function section 201 acquires the necessary measurement number-of-times conclusion information of the wireless terminal station 60 (step 1110). In the step 1100, in a case where it has been concluded that the necessary measurement number-of-times conclusion information is not retained in the database section 202, it substitutes a pre-decided rated-value x into the necessary measurement number-of-times conclusion information (step 1120). Finally, it obtains the measurement number of times in each wireless base station from the necessary measurement number-of-times conclusion information and the requested positioning quality information (step 1130).

In this embodiment, as shown in Fig. 6, the necessary measurement number-of-times conclusion information retained in the database section 202 is the standard deviation of a dispersion in the internal process delay of the wireless terminal that is an object of positioning. In a case where the standard deviation is retained in the database section 202, the standard deviation of the positioning-object wireless terminal station information is acquired in the step 1110, and the measurement number of times is obtained from the standard deviation and the requested positioning quality information in the step 1130. In a case where the standard deviation of the wireless terminal that is an object of positioning is not retained in the database section 202, the pre-decided rated-value x is substituted into the standard deviation in the step 1120, and the measurement number of times is obtained from the standard deviation and the requested positioning quality information in the step 1130.

In the method of calculating the measurement number of times, an equation for a general approval like Equation 1 may be employed.

Equation 1

$$n = \frac{t}{A^2}\sigma^2$$

Where, n is the measurement number of times, A is a permissible positioning error, σ is the standard deviation, and t is a value responding to the situation (value responding to the positioning error).

Further, in a case where the necessary measurement number-of-times conclusion information as shown in Fig. 7 is the measurement number of times obtained by adding the requested positioning quality information, upon acquiring information of the row corresponding to the positioning-object wireless terminal station information from a table 5010 in the step 1110, assume that the value obtained from row information acquired from the database section 202 and the requested positioning quality information is the measurement number of times in the step 1130.

Next, the other process method of the necessary measurement number-of-times decision function in the step 302 will be explained.

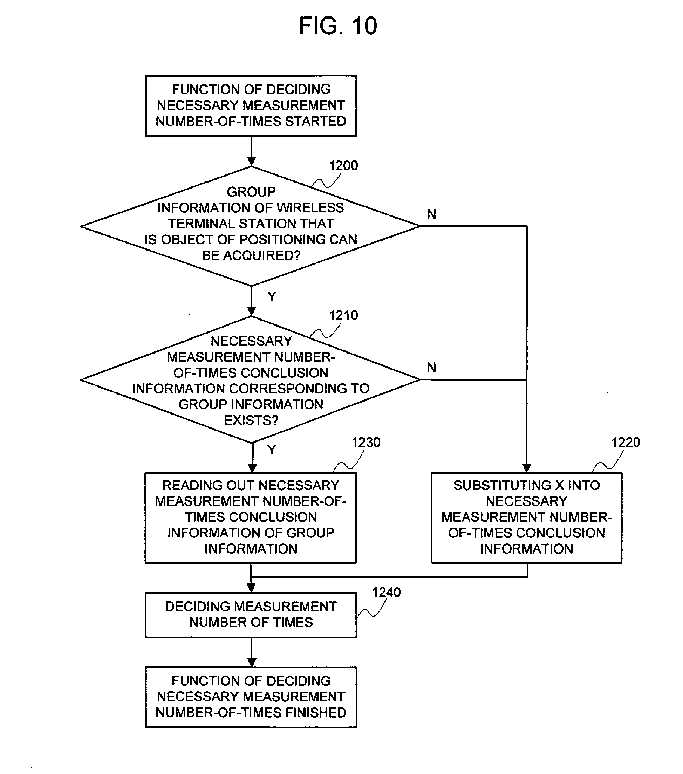

In Fig. 10, the process to be performed in the step 302 is shown with a flowchart of employing group information of the wireless terminal station 60 that is an object of positioning for processing.

At first, it is confirmed whether a conclusion on the group information of the wireless terminal station 60 can be drawn from the positioning-object wireless terminal station information obtained as the positioning request information (step 1200). In the step 1200, in a case where a conclusion on the group information can be drawn, the foregoing process in the case of individually having identified the wireless terminal station is performed group information by group information. In the step 1200, in a case where a conclusion on the group information cannot be drawn, the pre-decided rated-value x is substituted into the necessary measurement number-of-times conclusion information (step 1220), and the acquired value is substituted into the necessary measurement number of times (step 1240).

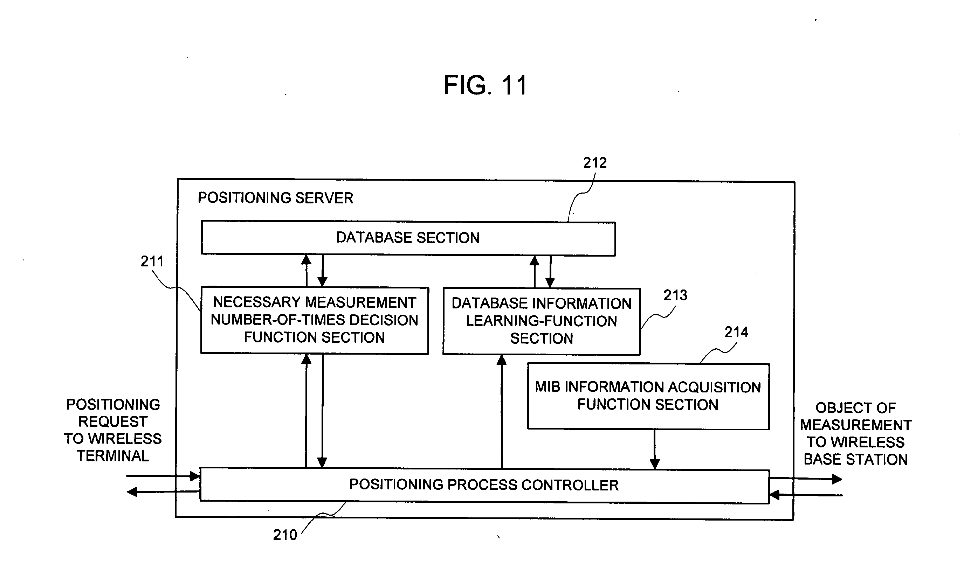

Herein, as mentioned above, the model number of the product, the model number of an IC for wireless communication, the manufacturer information of an IC for wireless communication, the correspondence wireless communication technique, and so on are expected as the group information. And, as the method of acquiring this group information, the method of causing each user or a network administrator to input the group information in inputting the personal information, the method of acquiring the group information from the wireless station by an MIB information acquisition function section 214 packaged into the positioning server 20 shown in Fig. 11, and so on are listed.

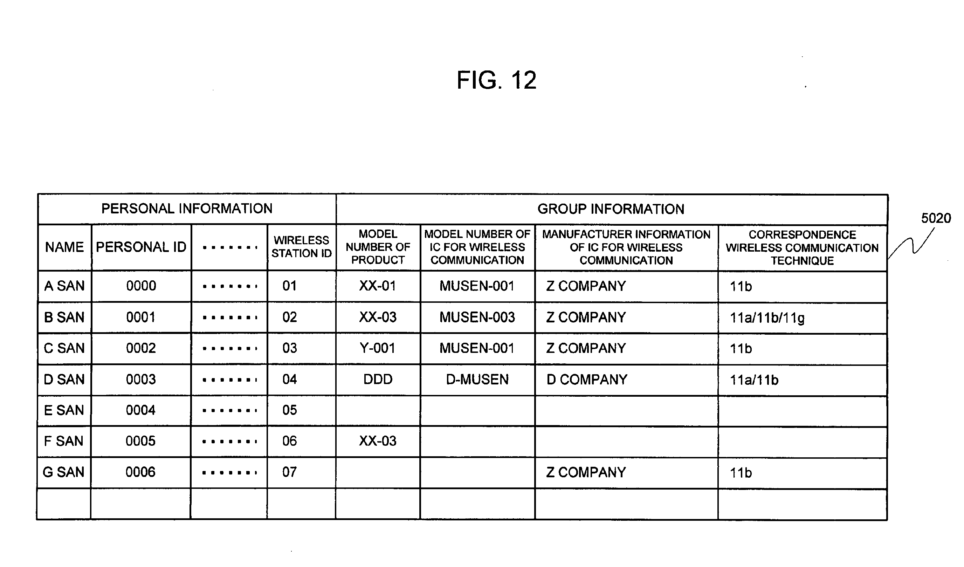

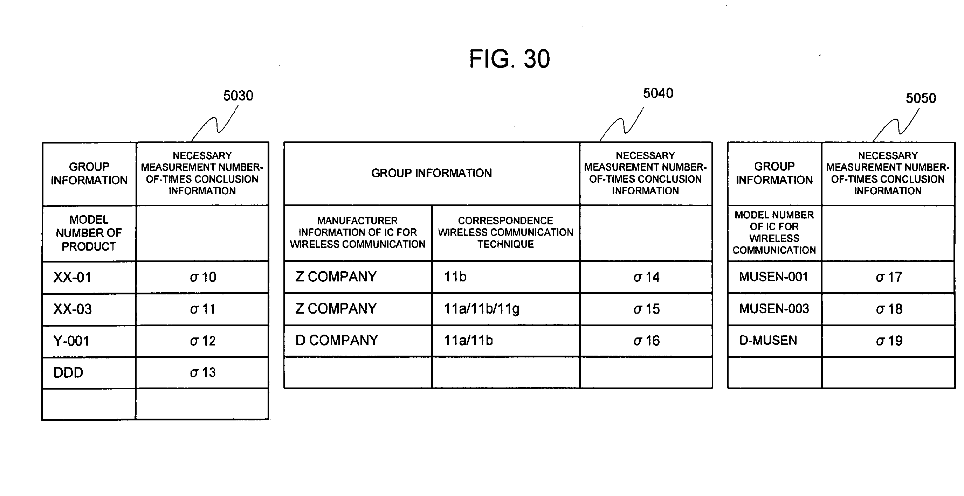

This acquired group information is preserved in the database section 202 having information like that of a table 5020 of Fig. 12, similarly to the personal information. This table 5020 is employed in drawing a conclusion on the group information of the wireless terminal station 60 in the step 1200. Further, the database station 202 has the necessary measurement number-of-times conclusion information of each group like tables 5030 to 5050 of Fig. 30. These tables 5030 to 5050 are employed in the step 1210 and the step 1230.

In addition hereto, yet another process method of the necessary measurement number-of-times decision function in the step 302 will be explained.

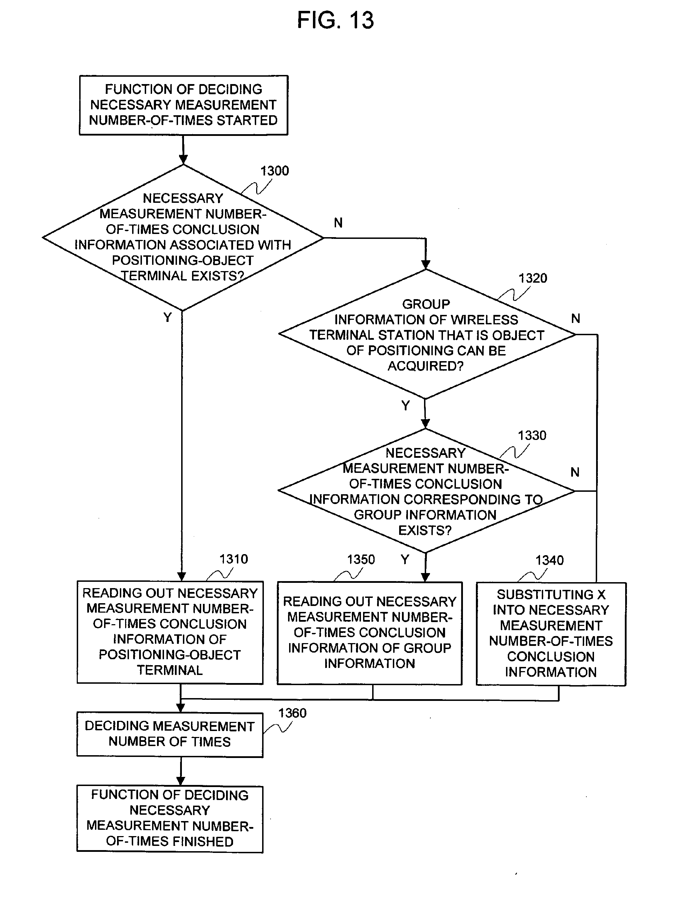

In Fig. 13, the process to be performed in the step 302 is shown with a flowchart of employing the positioning-object wireless terminal station information and the group information for processing.

At first, it is concluded from the positioning-object wireless terminal station information acquired by the necessary measurement number-of-times decision function section 201 whether the necessary measurement number-of-times conclusion information is retained in the database section 202 (step 1300). In a case where it has been concluded in the step 1300 that the necessary measurement number-of-times conclusion information is retained in the database section 202, the processes similar to the processes in and after the step 1110 of Fig. 9 are performed in and after a step 1310.

Further, in a case where it has been concluded in the step 1300 that the necessary measurement number-of-times conclusion information is not retained in the database section 202, the processes similar to the processes in and after the step 1200 of Fig. 10 are performed in and after a step 1320.

Further, in this embodiment, the location, in which the positioning request originates, includes the wireless terminal station 60, the positioning server 20, the wireless terminal station 80 that is not an object of positioning, an outside application server, etc.

Further, in this embodiment, the wireless base station may be selected as the positioning-object wireless station. The configuration in this case is one obtained by replacing the wireless terminal station 60 that is an object of positioning with the wireless base station in the above-mentioned configuration.

A specific explanation is shown. The positioning request source 10 selects the wireless base station as an object of positioning, and transmits the positioning request information to the positioning server 20. The positioning server 20 receives the positioning request information having information of the wireless base station that is an object of positioning, calculates the measurement number of times from the information of the wireless base station that is an object of positioning and the requested positioning quality information, selects a plurality of the wireless base stations, which exist in the neighborhood of the wireless base station that is an object of positioning as the measurement-performance wireless base station, and thereafter, transmits the measurement request information to each measurement-performance wireless base station. Based upon this measurement request information, each wireless base station performing a measurement performs the measurement for the wireless base station that is an object of positioning.

At this time, it is thinkable that the positioning-object wireless base station information, the necessary measurement number-of-times conclusion information and the requested positioning quality information are included in the positioning request information that is prepared in the positioning server 20. As the measurement-object wireless base station information, the MAC address of the positioning-object wireless base station, the IP address, the arbitrary ID allocated to each terminal, etc. are thinkable.

At this time, it is thinkable that the standard deviation of a dispersion in the internal process delay of the wireless base station that is an object of positioning is retained in the database section 202 as the necessary measurement number-of-times conclusion information retained. In a case where the standard deviation is retained in the database section 202, the standard deviation of the positioning-object wireless base station information is acquired in the step 1110, and the measurement number of times is obtained from the standard deviation and the requested positioning quality information in the step 1130. In a case where the standard deviation of the wireless base station that is an object of positioning is not retained in the database section 202, the pre-decided rated-value x is substituted into the standard deviation in the step 1120, and the measurement number of times is obtained from the standard deviation and the requested positioning quality information in the step 1130.

Further, in this embodiment, the table 5000 of the requested positioning precision and the measurement number of times shown in Fig. 7 may be retained in the database section 202 as the necessary measurement number-of-times conclusion information of each wireless base station. At this time, in a case where the table 5000 is retained in the database section 202, information of the row corresponding to the positioning-object wireless base station information is acquired from the table 5010 in the step 1110, and the value obtained from the row information acquired from the database section 202 and the requested positioning quality information is substituted into the measurement number of times in the step 1130. In a case where the table 5000 is not retained in the database section 202, the pre-decided rated-value x is substituted into the necessary measurement number-of-times conclusion information in the step 1120, and the acquired value is substituted into the measurement number of times in the step 1130.

Further, in this embodiment, as information that is used in order to decide the measurement number of times in the necessary measurement number-of-times decision function, the group information of the positioning-object wireless base station may be employed. As the group information of the wireless base station, the model number information of the product of the wireless base station, the model number information of an IC for wireless communication mounted onto the wireless base station, the manufacturer information of an IC for wireless communication mounted onto the wireless base station, the wireless communication technique information to which the IC for wireless communication mounted onto the wireless base station corresponds, etc. are thinkable. The group information is obtained from the table 5020 of the positioning-object wireless base station information and the group information as shown in Fig. 12.

Further, in this embodiment, the information that is used in order to decide the measurement number of times in the necessary measurement number-of-times decision function may include the necessary measurement number-of-times conclusion information of the wireless base station performing a measurement. In this case, it is necessary for the database section 202 to have a database of the necessary measurement number-of-times conclusion information of the wireless base station performing a measurement.

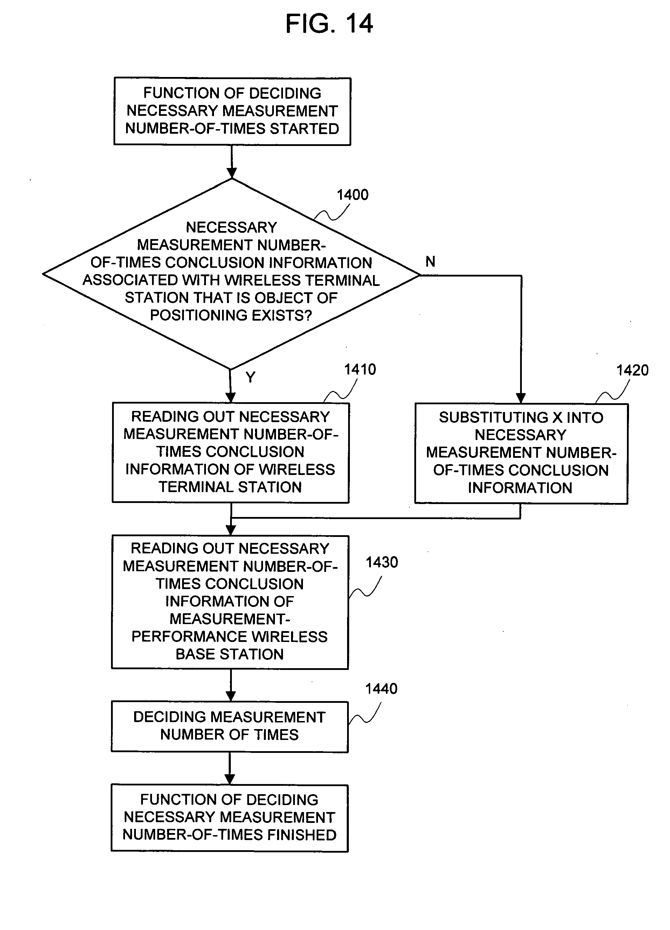

In Fig. 14, a flowchart is shown of the process in the case of employing the necessary measurement number-of-times conclusion information of the positioning-object wireless terminal station and the necessary measurement number-of-times conclusion information of the measurement-performance wireless base station to decide the measurement number of times with the flowchart of Fig. 9 assumed to be a reference.

It includes the step of reading out the necessary measurement number-of-times conclusion information of the wireless base station performing a measurement (step 1430) and the step of employing these kinds of information to calculate the measurement number of times (step 1440) in addition to the step 1110 in which the necessary measurement number-of-times conclusion information of the positioning-object wireless terminal station is read out.

In the step 1430 of Fig. 14, the necessary measurement number-of-times conclusion information, which the database section 202 retains, includes the standard deviation of a dispersion in the process delay of each wireless base station, the table 5000 of the requested positioning precision and the measurement number of times as shown in Fig. 7, etc.

An example will be explained of the method of employing the necessary measurement number-of-times conclusion information of the positioning-object wireless terminal station and the wireless base station performing a measurement to decide the measurement number of times in the step 1440 of Fig. 14. Additionally, in this example, the case that the standard deviation of a dispersion in the process delay of each wireless terminal station and each wireless base station is retained in the necessary measurement number-of-times conclusion information of the database section 202 will be explained. In this case, the method is thinkable of averaging the values obtained by raising respective standard deviations of the measurement-performance wireless base station and the positioning-object wireless terminal station to the second power, thereby to obtain the number of times of the measurement with Equation 1 in deciding the number of times of the measurement that is performed in the wireless base station performing a measurement.

In another example of the method of employing the necessary measurement number-of-times conclusion information of the positioning-object wireless terminal station and the wireless base station performing a measurement to decide the measurement number of times in the step 1440 of Fig. 14, the case that the table 5000 of the requested positioning precision and the measurement number of times as shown in Fig. 7 are retained in the necessary measurement number-of-times conclusion information of the database section 202 for each wireless terminal station and each wireless base station, respectively, will be explained. In this case, the method is thinkable of summing up respective measurement number of times of the measurement-performance wireless base station and the positioning-object wireless terminal station, thereby to obtain the measurement number of times in deciding the number of times of the measurement that is performed in the wireless base station performing a measurement.

A second embodiment will be explained.

In the foregoing first embodiment, the positioning server 20 decided the number of times of the measurement to be performed in each wireless base station, and in another operational example, each wireless base station performing a measurement may play a role of the portion for deciding the measurement number of times.

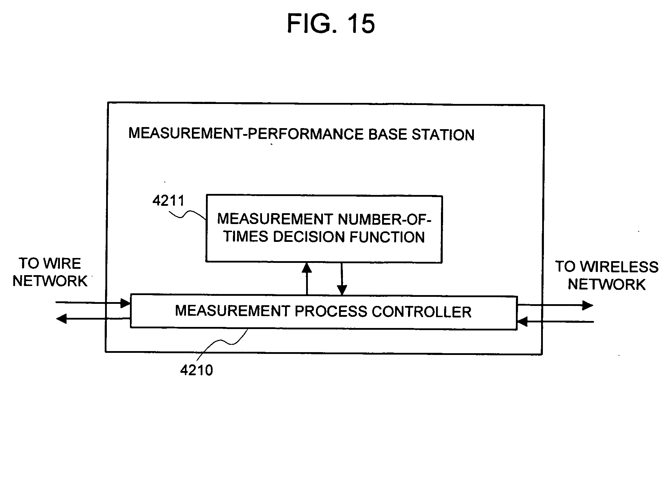

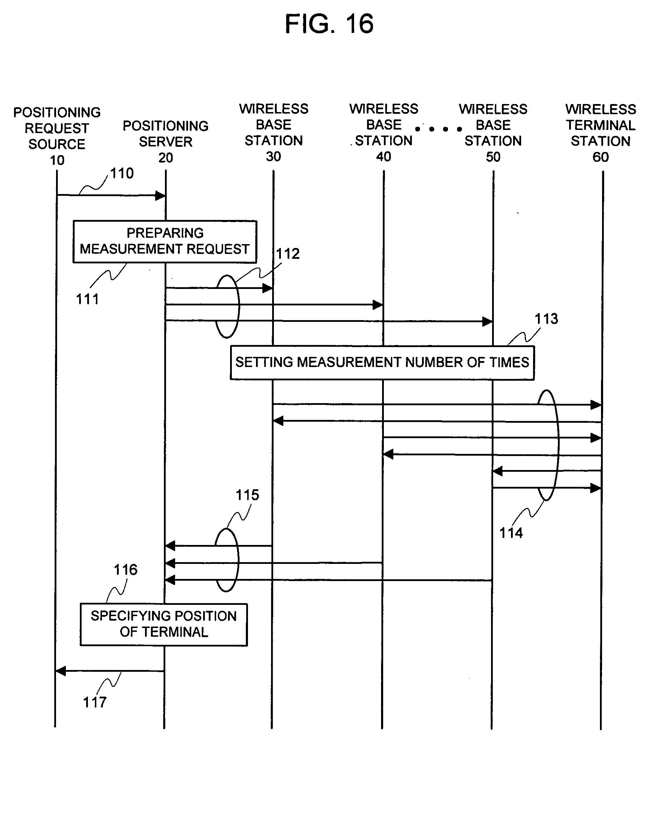

A configuration of the wireless base station in the case of having a functional section for deciding the measurement number of times is shown in Fig. 15. Further, a process sequence in the case of deciding the number of times of the measurement that is performed in the measurement-object wireless base station is shown in Fig. 16.

The positioning server 20 receives the positioning request information transmitted from the positioning request source 10 (step 110), prepares measurement request information based upon the positioning request information (step 111), and transmits it to each measurement-performance wireless base station (step 112). And, when each measurement-performance wireless base station receives the measurement request information from the positioning server 20, the measurement number-of-times decision function section 4211 thereof decides the measurement number of times based upon its measurement request information (step 113). The processes in and after the step 113 are similar to the details explained in the sequence of Fig. 2.

At this time, it is thinkable that the positioning-object wireless terminal station information, the necessary measurement number-of-times conclusion information and the requested positioning quality information are included in the measurement request information that is prepared by the positioning server 20 in the step 111 of Fig. 16. As the positioning-object wireless terminal station information, the user name that is personal information, the personal ID, the PC name, the MAC address of the wireless terminal station, the IP address, the arbitrary wireless station ID allocated to each terminal, etc. are thinkable. As the necessary measurement number-of-times conclusion information, the standard deviation of a dispersion in the internal process delay of the wireless station that is engaged in the measurement, the table 5000 of the requested positioning precision and the measurement number of times as shown in Fig. 7, etc. are thinkable. As the requested positioning quality information, the requested positioning precision, and the use application information are thinkable.

In the step 112 of Fig. 16, in a case where the database section 202 retains the table 5000 of the request positioning precision and the measurement number of times as the necessary measurement number-of-times conclusion information, and transmits the content of its table as the necessary measurement number-of-times conclusion information, only the table information of the portion that corresponds to the positioning-object wireless terminal station is enough as the necessary measurement number-of-times conclusion information that is included in the measurement request information.

In the step 113 of Fig. 16, as the method of deciding the measurement number of times by each wireless base station performing a measurement, the method is thinkable of, in a case where the standard deviation is notified as the necessary measurement number-of-times conclusion information, calculating the measurement number of times from the notified standard deviation and the requested positioning quality information.

Further, the method is thinkable of, in a case where the table of the requested positioning precision and the measurement number of times is notified as the necessary measurement number-of-times conclusion information, drawing a conclusion on the measurement number of times from the notified table information and the requested positioning quality information.

Further, the measurement request information to be prepared by the positioning server 20 in the step 111 of Fig. 16 may include the group information of the positioning-object wireless terminal station. In a case where the group information is included in the measurement request information, when the content of its table is transmitted as the necessary measurement number-of-times conclusion information, only the table information of the portion that corresponds to the group information is enough as the necessary measurement number-of-times conclusion information that is included in the measurement request information.

A third embodiment will be explained.

In the third embodiment, the case of having a function for learning the database section 202 inside the positioning server 20 will be explained.

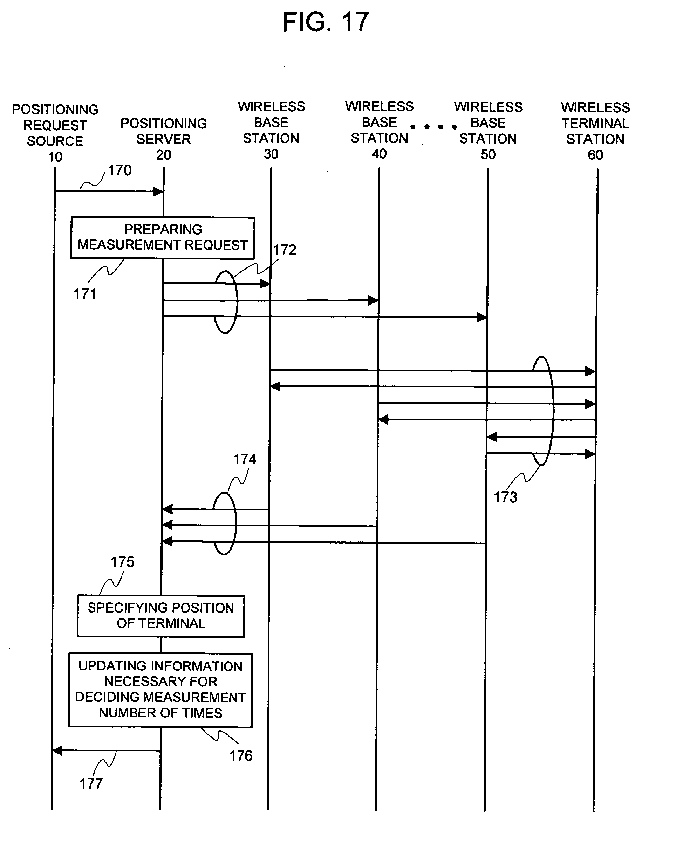

Herein, the case of having the learning function of the database section 202 in the process sequence of Fig. 2 will be explained. In Fig. 17, the entirety of the process sequence in this situation is shown. After the positioning server 20 employs the measurement result received from each wireless base station to specify the position of the wireless terminal station 60 (step 175), it updates the necessary measurement number-of-times conclusion information that is employed for calculating the number of times of the measurement, which is performed in each wireless base station, responding to a necessity (step 176), and transmits the specified positional information of the wireless terminal station 60 to the positioning request source 10 (step 177).

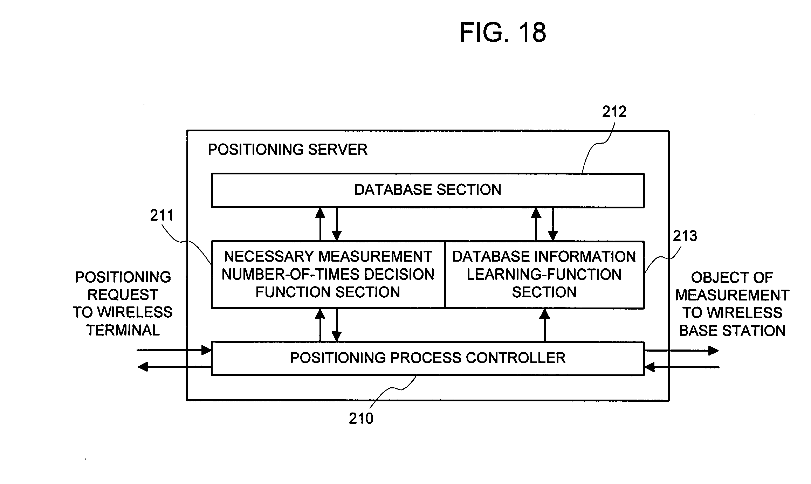

A configuration of the positioning server 20 is shown in Fig. 18. The positioning server 20 is comprised of a database information learning-function section 213 for updating information of the database section 212 from the measurement result and the information that the database section 212 retains, in addition to a positioning process controller 210, a necessary measurement number-of-times decision function section 211, and a database section 212, of which the function is identical to that of 200 to 202, being the functional section of the positioning server shown in Fig. 5, respectively.

Herein, as the information that the database section 212 retains, the necessary measurement number-of-times conclusion information is listed. Further, the measurement result information includes one part or the entirety of the measured radio wave propagation time information, the total measurement number-of-times information, the distance information from the calculated position of the wireless terminal station 60 to the wireless base station having performed a measurement, etc.

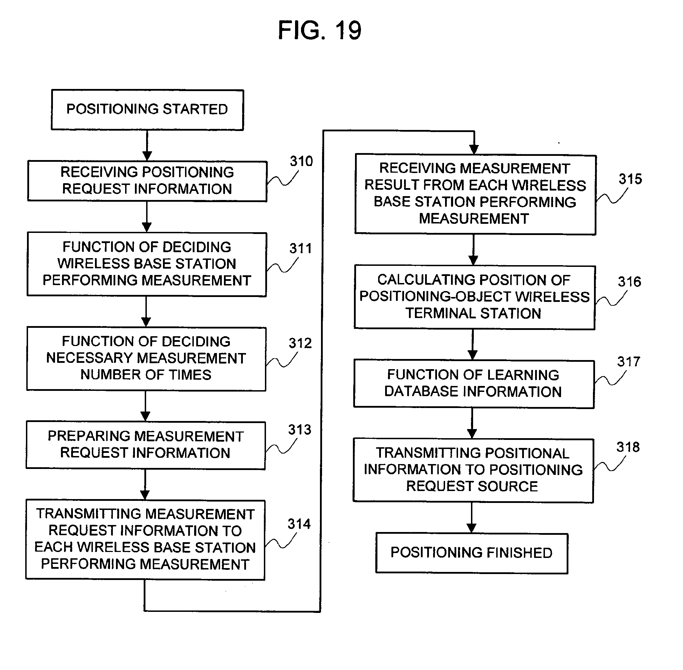

Next, an operation in the positioning server 20 will be explained. Fig. 19 shows a flowchart of the process inside the positioning server 20 shown in Fig. 18.

The steps 310 to 316 are similar to the processes in Fig. 8. Finally, the positioning process controller 210 transmits information of the specified positional information of the wireless terminal station 60 to the positioning request source 10 (step 318), and the positioning process is finished.

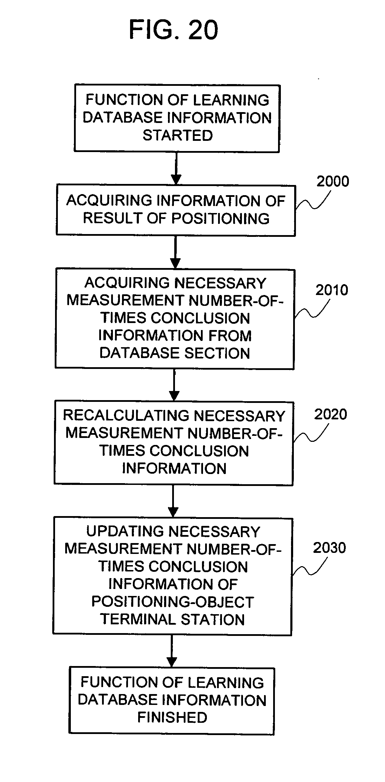

A flowchart of a step 317, being a process of the database information learning-function section 213, is shown in Fig. 20.

At first, the database information learning-function section 213 acquires measurement result information from the positioning process controller 210 (step 2000). Next, it acquires necessary measurement number-of-times conclusion information from the database section 212 (step 2010). It employs these kinds of information acquired in the step 2000, and the step 2010 to recalculate the necessary measurement number-of-times conclusion information (step 2020), and updates the necessary measurement number-of-times conclusion information retained in the database section 212 (step 2030).

Herein, in the process to be performed in the step 2020, the case that the necessary measurement number-of-times conclusion information retained in the database section 212 is the standard deviation of a dispersion in the internal process delay of the positioning-object terminal will be explained. In this case, in the method of recalculating the necessary measurement number-of-times conclusion information, the standard deviation of all of the measurement result may be obtained from this-time measurement result information, thereby to obtain a new standard deviation by performing an operational process weighted with the total measurement number of times for the calculated standard deviation, and the standard deviation retained in the necessary measurement number-of-times conclusion information.

One example of the weighted operational process will be explained. The value is obtained by dividing the value, which is obtained by adding up the value obtained by multiplying the standard deviation obtained from the all of the measurement result by the total measurement number of times, and the value obtained by multiplying the standard deviation retained in the necessary measurement number-of-times conclusion information by a pre-decided value, by the value obtained by summing up the total measurement number of times and a pre-decided value.

That is, in one example of the weighted operational process, the following Equation 2 may be employed.

Equation 2

$$\sigma_{new} = \sqrt{\frac{A\sigma_{old}^{2} + B\sigma_{mea}^{2}}{A + B}}$$

Where, $\sigma_{new}$ is new necessary-measurement number-of-times information, $\sigma_{old}$ is necessary measurement number-of-times information preserved so far in the database section 212, $\sigma_{mea}$ is a standard deviation obtained from this-time measurement result, A is the number of the measurement result so far, and B is the number of this-time measurement result.

Further, in the method of recalculation in the case that the necessary measurement number-of-times conclusion information preserved in the database section 212 is the table 5000 of Fig. 7, the following Equation 3 may be employed.

Equation 3

$$n_{new} = \frac{Cn_{old} + Dn_{mea}}{C + D}$$

Where, $n_{new}$ is new necessary-measurement number-of-times information, $n_{old}$ is necessary measurement number-of-times information preserved so far in the database section 212, $n_{mea}$ is the measurement number of times that is obtained by substituting the standard deviation obtained from this-time measurement result into the standard deviation of Equation 1. C is the number of the measurement result so far, and D is the number of this-time measurement result.

Further, the database section 212 may have past measurement result information in addition to the necessary measurement number-of-times conclusion information as the information that it retains. The past measurement result information includes one part or the entirety of radio wave propagation time information measured in the past, total measurement number-of-times information, distance information from the calculated position of the positioning-object wireless station to the wireless base station having performed a measurement, etc.

One example of the method of recalculation in the case that the necessary measurement number-of-times conclusion information is the standard deviation is shown by employing this past measurement result information. At first, the radio wave propagation time information measured in the past is corrected with following Equation 4.

Equation 4

$$t_{cal,i} = t_{mea,i} - \frac{L_{mea,i}}{c}$$


Where, $t_{cal,i}$ is a correction value of the radio wave propagation time preserved in the i-th place, $t_{mea,i}$ is a radio wave propagation time preserved in the i-th place, $L_{mea,i}$ is a distance between the positioning-object wireless station and the measurement-performance wireless station preserved in the i-th place, and c is the velocity of light. Upon obtaining the standard deviation of the correction value of the radio wave propagation time obtained in this equation, assume it to be the necessary measurement number of times.

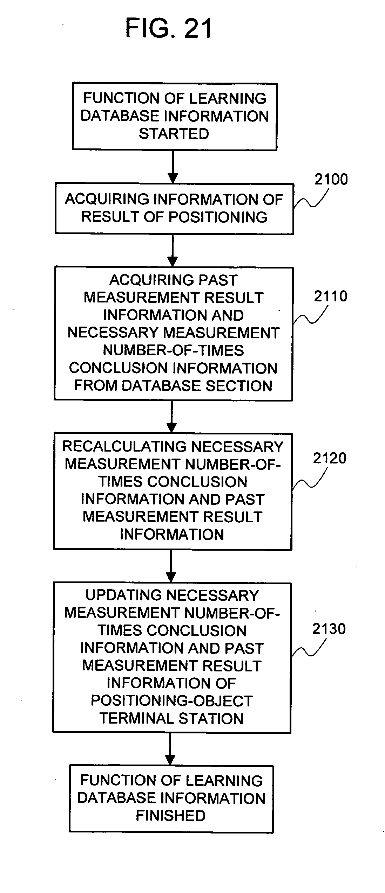

A flowchart of a step 317, being a process of the database information learning-function section 213, is shown in Fig. 21.

At first, the database information learning-function section 213 acquires measurement result information from the positioning process controller 210 (step 2100). Next, it acquires past measurement result information and the necessary measurement number-of-times conclusion information from the database section 212 (step 2110). It employs these kinds of information acquired in the step 2100 and the step 2110 to recalculate the necessary measurement number-of-times conclusion information and the past measurement result information (step 2120), and updates the necessary measurement number-of-times conclusion information and the past measurement result information preserved in the database section 212 (step 2130).

Herein, in the process to be performed in the step 2120 of Fig. 21, the process in the case that the necessary measurement number-of-times conclusion information retained in the database section 212 is the standard deviation of a dispersion in the internal process delay of the positioning-object terminal will be explained. In this case, the method of recalculating the necessary measurement number-of-times conclusion information includes a method of obtaining the standard deviation of all of the measurement result from the radio wave propagation time information measured in the past, which is included in the past measurement result information, and this-time measurement result information, and of performing the operational process weighted by employing the total measurement number of times for the obtained standard deviation and the standard deviation retained in the necessary measurement number-of-times conclusion information, thereby to get a new standard deviation.

Further, also in the case that the necessary measurement number-of-times conclusion information retained in the database section 202 is the table of Fig. 7, it is thinkable to update the content of the database with the method similar to that of the case of the foregoing standard deviation.

Further, as an example of the past measurement result information, it is thinkable to pre-retain a certain number-of-times portion of the past measurement result. In this case, it is thinkable that, if the measurement number of times exceeds the foregoing certain number of times, the oldest past-measurement result information is deleted and the newest measurement result information is written.

Further, the operation of this embodiment of having the function for learning the database section 202 inside the positioning server 20 is enactable in all cases including the case that the information, which is employed in the foregoing necessary measurement number-of-times decision function, is the group information.

Next, a fourth embodiment will be explained.

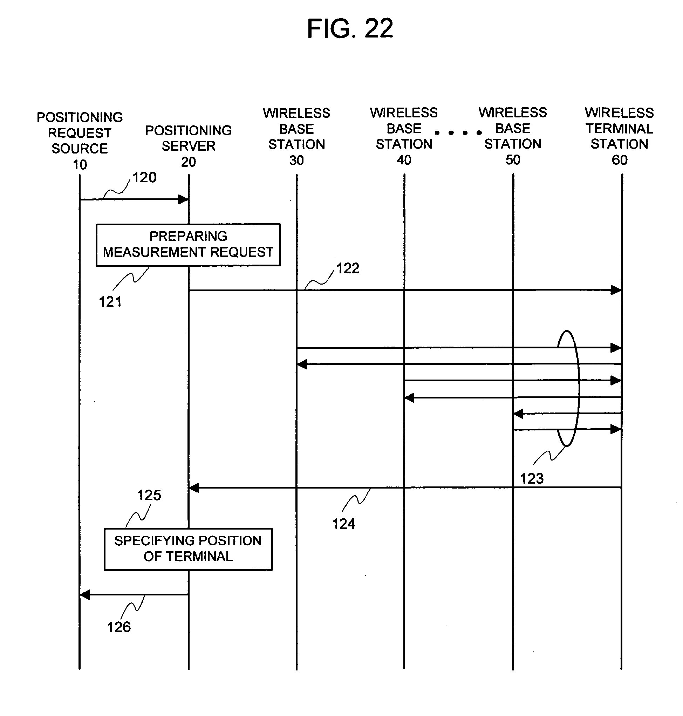

With the fourth embodiment, its basic configuration is one as shown in Fig. 1; however it is also thinkable that the measurement for specifying the position of the wireless terminal station 60 is performed in the wireless terminal station 60. An operation of the fourth embodiment will be explained by employing Fig. 22.

In Fig. 22, the process sequence in the case of performing a measurement by the wireless terminal station 60 that is an object of positioning is shown.

The positioning request source 10 requesting the positioning transmits the positioning request information to the positioning server 20 (step 120). After the positioning server 20 draws a conclusion on the measurement number of times based upon the positioning request information and the necessary measurement number-of-times conclusion information to prepare the measurement request information (step 121), it transmits the measurement request information to the wireless terminal station 60 (step 122). The wireless terminal station 60 performs the measurement for each of the measurement-object wireless base stations 30, 40, and 50 responding to the measurement request information (step 123). And, the positioning server 20 receives each measurement result (step 124). The positioning server 20 specifies the position of positioning-object wireless terminal station 60 in consideration of the measurement result from the wireless terminal station 60 (step 125). Thereafter, it updates information necessary for deciding the measurement number of times (step 126), and transmits the result of the specified position to the positioning request source 10 (step 127).

At this time, the information that the database section 202 retains is mainly the necessary measurement number-of-times conclusion information of each wireless base station that is an object of measurement.

At this time, it is thinkable that the measurement-object wireless base station information and the measurement number of times information are included in the measurement request information that the positioning server prepares in the step 120. As the measurement-object wireless base station information, the MAC address of the measurement-object wireless base station, the IP address, the arbitrary wireless station ID allocated to each wireless base station, etc. are thinkable.

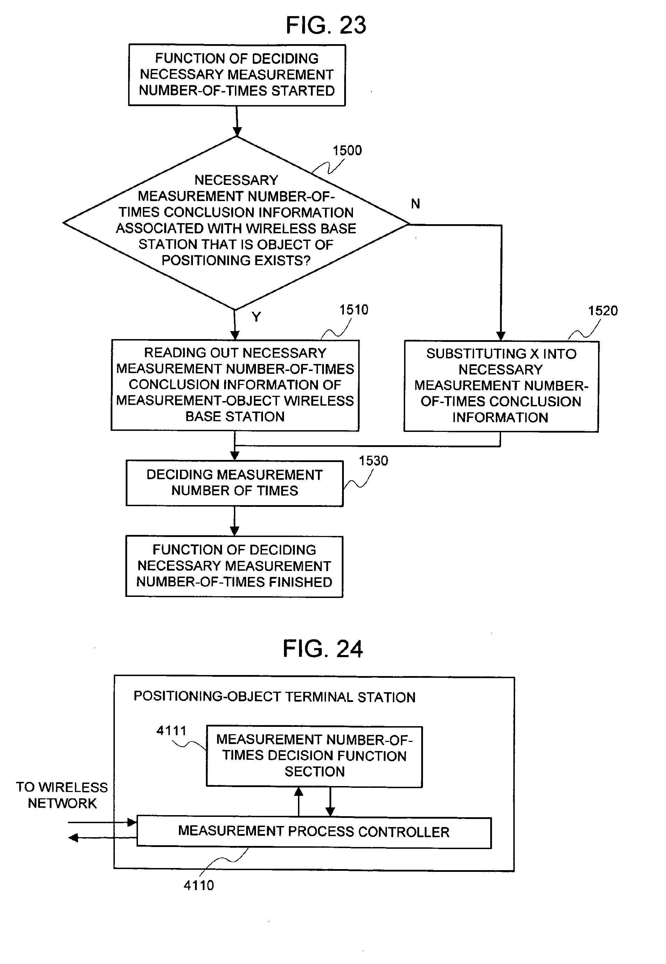

In Fig. 23, a flowchart in the case of measuring the radio wave propagation time from the wireless terminal station is shown.

The process procedure is similar to that of Fig. 9. The necessary measurement number-of-times conclusion information is acquired for each wireless base station that is an object of measurement (step 1510), and the measurement number of times is decided (step 1530).

In an example of the method of deciding the measurement number of times in the step 1530 of Fig. 23, in a case of retaining the standard deviation as the necessary measurement number-of-times conclusion information of the database section 202, the measurement number of times is calculated from the standard deviation and the requested positioning quality information, and, in a case of retaining the table 5000 of the requested positioning precision and the measurement number of times, a conclusion on the measurement number of times is drawn from the necessary measurement number-of-times conclusion information and the requested positioning quality information.

Further, as another example of the measurement-object wireless base station information, the group information of the wireless base station (the product model number of the wireless base station and the model number of an IC for wireless communication mounted onto the wireless base station), etc. is listed. In the flowchart for measuring the radio wave propagation time in this case, the wireless terminal station of the step 1200 of Fig. 10 is replaced with each wireless base station; however the process can be realized with identical procedure.

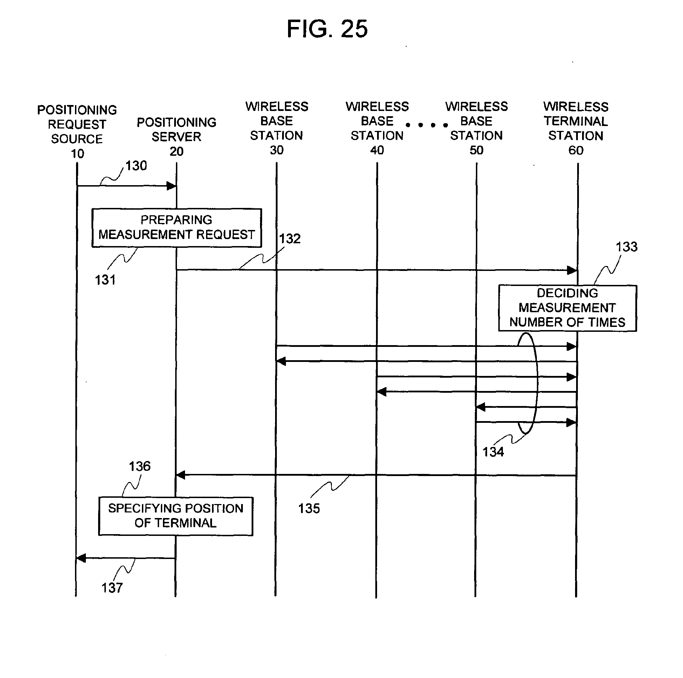

Further, the functional portion for deciding the measurement number of times may be packaged into the wireless terminal station 60 that is an object of positioning. In Fig. 24, a configuration is shown of the wireless terminal station in the case of having the functional section for deciding the measurement number of times. In Fig. 25, the process sequence in the case of deciding the measurement number of times in the positioning-object wireless terminal station is shown.

The positioning server 20 prepares the measurement request information (step 131) based upon the positioning request information received from the positioning request source 10 (step 130), and transmits it to the positioning-object wireless terminal station 60 (step 132).

The positioning-object wireless terminal station 60 decides the measurement number of times based upon the received measurement request information in a measurement number-of-times decision function section 411 thereof (step 133). The processes in and after the step 134 are similar to that of Fig. 22. At this time, it is thinkable that the measurement-object wireless base station information, the necessary measurement number-of-times conclusion information, and the requested positioning quality information are included in the measurement request information that the positioning server 20 prepares. As the measurement-object wireless base station information, the MAC address of the measurement-object wireless base station, the IP address, the arbitrary ID allocated to each terminal, etc. are thinkable. Further, only the table information of the row corresponding to the measurement-object wireless base station is enough as the necessary measurement number-of-times conclusion information, which is included in the measurement request information in the case that the database section 202 retains the table 5000 of the requested positioning precision and the measurement number of times as the necessary measurement number-of-times conclusion information.

Further, in an example of the method of deciding the measurement number of times, in a case where the database section 202 retains the standard deviation as the necessary measurement number-of-times conclusion information, the measurement number of times is calculated from the standard deviation and the requested positioning quality information, and in a case of retaining the table 5000 of the requested positioning precision and the measurement number of times, a conclusion on the measurement number of times is drawn from the necessary measurement number-of-times conclusion information and the requested positioning quality information.

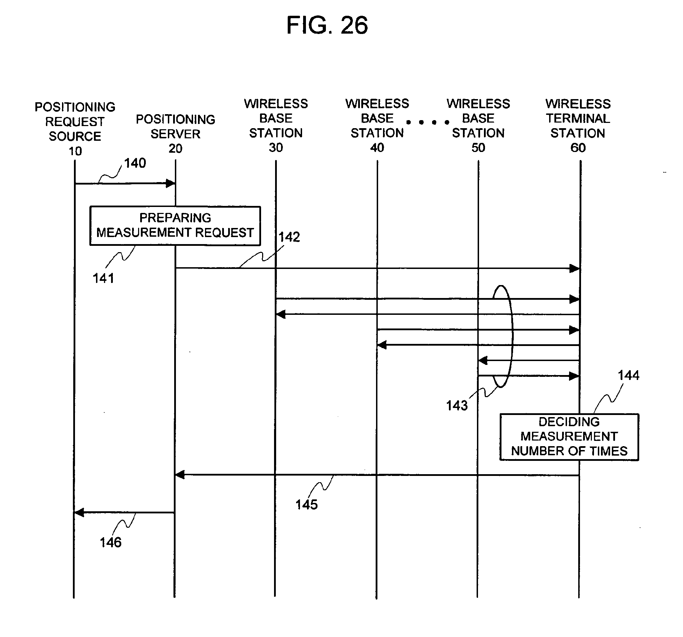

Further, the operational portion for specifying the position of the wireless terminal station 60, being an object of positioning, may be packaged into the wireless terminal station 60. In Fig. 26, the process sequence in the case of specifying the position of the terminal in the positioning-object wireless terminal station is shown. The positioning-object wireless terminal station 60 performs the measurement of the radio wave propagation time (step 143), and specifies the position of the positioning-object wireless terminal station 60 based upon its result (step 144). The processes other than this are identical to that of Fig. 22.

At this time, it is thinkable that measurement-object wireless base station information and the measurement number-of-times information are included in the measurement request information that the positioning server 20 prepares. As the measurement-object wireless base station information, the MAC address of the measurement-object wireless base station, the IP address, the arbitrary wireless station ID allocated to each wireless terminal station, etc. are thinkable.

Further, in an example of the method of deciding the measurement number of times, in a case where the database section 202 retains the standard deviation as the necessary measurement number-of-times conclusion information, the measurement number of times is calculated from the standard deviation and the requested positioning quality information, and in a case of retaining the table 5000 of the requested positioning precision and the measurement number of times, a conclusion on the measurement number of times is drawn from the necessary measurement number-of-times conclusion information and the requested positioning quality information.

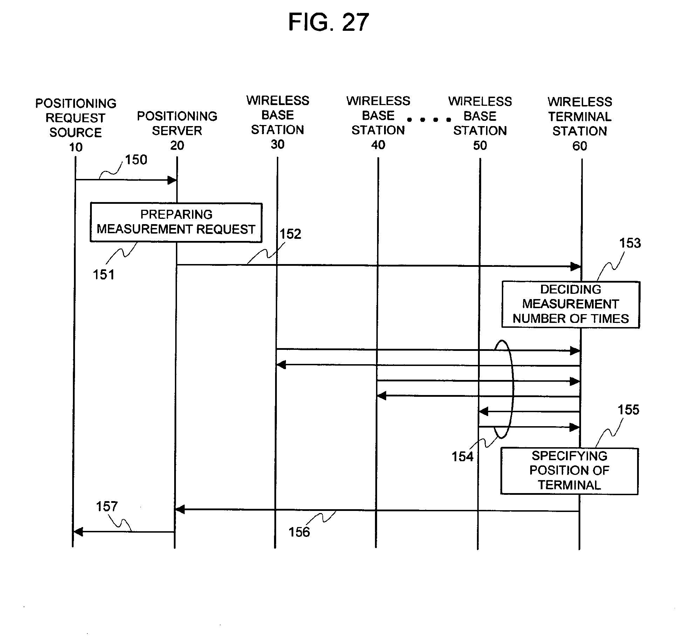

Further, the measurement number-of-times decision portion and the position-specifying operation portion may be packaged into the wireless terminal station 60. In Fig. 27, the process sequence in the case of deciding the measurement number of times and of specifying the position in the positioning-object wireless terminal station is shown.

This process is a process having the process of Fig. 25 and the process of Fig. 26 combined. At this time, it is thinkable that the measurement-object wireless base station information and the necessary measurement number-of-times conclusion information and the requested positioning quality information are included in the measurement request information that the positioning server 20 prepares.

As the measurement-object wireless base station information, the MAC address of the measurement-object wireless base station, the IP address, the arbitrary ID allocated to each terminal, the group information, etc. are thinkable. Further, only the table information of the portion, which corresponds to the measurement-object wireless base station, is enough as the necessary measurement number-of-times conclusion information, which is included in the measurement request information in the case that the database section 202 retains the table 5000 of the requested positioning precision and the measurement number of times as the necessary measurement number-of-times conclusion information.

Further, in an example of the method of deciding the measurement number of times, in a case where the database section 202 retains the standard deviation as the necessary measurement number-of-times conclusion information, the measurement number of times is calculated from the standard deviation and the requested positioning quality information, and in a case of retaining the table 5000 of the requested positioning precision and the measurement number of times, the measurement number of times is calculated from the necessary measurement number-of-times conclusion information and the requested positioning quality information.

Also in this embodiment, it is thinkable that the positioning server 20 is provided with the foregoing learning-function of the database.

A fifth embodiment will be explained.

In the fifth embodiment, the case of performing the measurement for specifying the position of the wireless terminal station 60 in the wireless terminal station 60 and the wireless base stations 30, 40 and 50 will be explained.

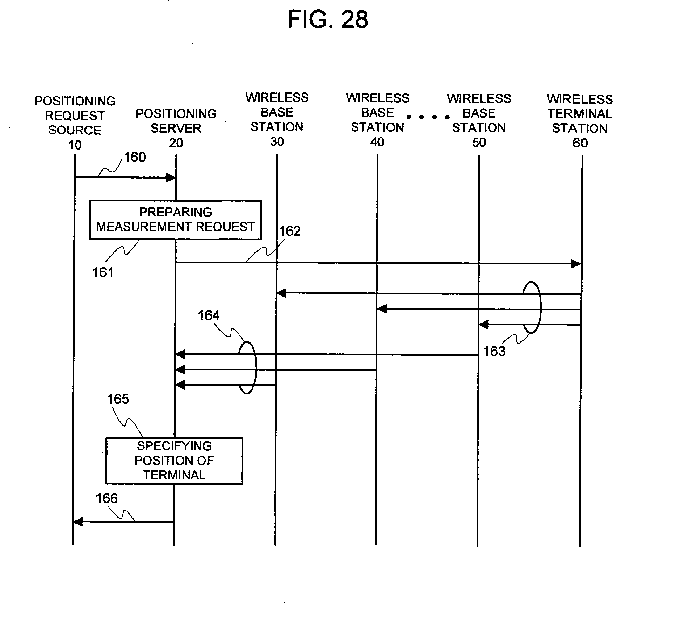

An operation of the present invention will be explained by employing Fig. 28. Fig. 28 shows the process sequence in the case of employing the wireless terminal station 60 that is an object of positioning, and the wireless base stations 30, 40 and 50 to perform a measurement.

The positioning request source 10 requesting the positioning transmits the positioning request information to the positioning server 20 (step 160). After the positioning server 20 draws a conclusion on the measurement number of times based upon the positioning request information and the necessary measurement number-of-times conclusion information to prepare the measurement request information (step 161), it transmits the measurement request information to the wireless terminal station 60 (step 162). The wireless terminal station 60 performs a measurement for each of the measurement-object wireless base stations 30, 40, and 50 responding to the measurement request information (step 163). And, the positioning server 20 receives each measurement result from each measurement-object wireless base station (step 164). The positioning server 20 specifies the position of positioning-object wireless terminal station 60 in consideration of the measurement result from the wireless terminal station 60 (step 165). Thereafter, it transmits a result of the specified position to the positioning request source 10 (step 167).

At this time, the information that the database section 202 retains is mainly the necessary measurement number-of-times conclusion information of each wireless base station that is an object of measurement.

At this time, it is thinkable that the measurement-object wireless base station information and the measurement number-of-times information are included in the measurement request information that the positioning server prepares in the step 160. As the measurement-object wireless base station information, the MAC address of the measurement-object wireless base station, the IP address, the arbitrary wireless station ID allocated to each wireless base station, etc. are thinkable.

Further, in an example of the method of deciding the measurement number of times, in a case where the database section 202 retains the standard deviation as the necessary measurement number-of-times conclusion information, the measurement number of times is calculated from the standard deviation and the requested positioning quality information, and in a case of retaining the table 5000 of the requested positioning precision and the measurement number of times, a conclusion on the measurement number of times is drawn from the necessary measurement number-of-times conclusion information and the requested positioning quality information.

Further, in an example of the method of deciding the measurement number of times, in a case where the database section 202 retains the standard deviation as the necessary measurement number-of-times conclusion information, the measurement number of times is calculated from the standard deviation and the requested positioning quality information, and in a case of retaining the table 5000 of the requested positioning precision and the measurement number of times, a conclusion on the measurement number of times is drawn from the necessary measurement number-of-times conclusion information and the requested positioning quality information.

Also in this embodiment, it is thinkable that the positioning server 20 is provided with the foregoing learning-function of the database.

A sixth embodiment will be explained.

In the foregoing embodiments, the necessary measurement number-of-times conclusion information was retained in the database section 202 retained by the positioning server 20, and, in the sixth embodiment, the case that the database section 202 does not retains the necessary measurement number-of-times conclusion information will be explained by employing Fig. 5.

The measurement process controller 200 having received the positioning request information from the positioning request source 10 describes the pre-decided measurement number of times in the measurement request information, and transmits the measurement request information to the measurement-performance base station. Thereafter, the measurement-performance base station performs the measurement based upon its measurement request information, and transmits the measurement number of times and the measurement result to the positioning server 20. The positioning server 20 delivers the measurement result and the measurement number of times, which the measurement process controller 200 received, to the necessary measurement number-of-times decision function section 201, and the necessary measurement number-of-times decision function section 201 accumulates the number of times of the performed measurement and the obtained measurement result temporarily in the database section 202. And, the necessary measurement number-of-times decision function section 201 calculates the standard deviation from the accumulated measurement result, and compares the value obtained by substituting the calculated standard deviation into the standard deviation of Equation 1 with the accumulated measurement number of times. In a case where the value obtained by substituting into to the standard deviation of Equation 1 is larger than the accumulated measurement number of times, the necessary measurement number-of-times decision function section 201 updates the measurement number of times, and performs the above-mentioned measurement process by the updated measurement number of times. In a case where the value obtained by substituting into the standard deviation of Equation 1 becomes smaller than the accumulated measurement number of times, it deletes a data accumulated in the database section 202, and performs a process for finishing the measurement.

The effect of the present invention in accordance with this embodiment lies in a point that the positioning with a high precision can be realized without having the database of the necessary measurement number-of-times conclusion information in the database section 202.

**Claims**

1. A positioning system for determination a position of wireless station that is an object of positioning using measuring a communication situation between a said wireless station that is an object of positioning and each of a plurality of wireless stations other than said wireless station that is an object of positioning, **characterized in** including:

   a database having identification information of said wireless station that is an object of positioning, or identification information of said plurality of said wireless stations and necessary measurement number-of-times conclusion information for drawing a conclusion on a measurement number of times stored correspondingly to each other, said necessary measurement number-of-times conclusion information derived from a characteristic of said wireless station that is an object of positioning, or a characteristic of said plurality of said wireless stations, or a characteristic of a combination of said wireless station that is an object of positioning and said plurality of said wireless stations; and
   a means for receiving identification information of said wireless station that is an object of positioning, or identification information of said plurality of said wireless stations, for retrieving necessary measurement number-of-times conclusion information corresponding to this identification information from said database, and for deciding the measurement number of times based upon this necessary measurement number-of-times conclusion information.

2. A positioning system for measuring a communication situation between a wireless station that is an object of positioning and each of a plurality of wireless stations other than said wireless station that is an object of positioning, thereby to specify a position of said wireless station that is an object of positioning, **characterized in** including:

a database having a first table, said first table having identification information of said wireless station and group information, being information associated with a group of which a characteristic resembles the wireless station, caused to correspond to each other, and a second table filed, said second table having said group information and necessary measurement number-of-times conclusion information caused to correspond to each other; and a means for receiving identification information of said wireless station that is an object of positioning, or identification information of said plurality of said wireless stations, for retrieving group information corresponding to this identification information from said first table, for retrieving necessary measurement number-of-times conclusion information corresponding to this group information from said second table, and for deciding a measurement number of times based upon this necessary measurement number-of-times conclusion information.

3. The positioning system according to claim 2, **characterized in that** said group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

4. The positioning system according to claim 2, **characterized in** including a means for acquiring MIB information, thereby to acquire said group information.

5. The positioning system according to claim 2, **characterized in that** said necessary measurement number-of-times conclusion information is a measurement number of times.

6. The positioning system according to claim 2, **characterized in that** said necessary measurement number-of-times conclusion information is a standard deviation of a dispersion in an internal process delay in the wireless station that is an object of positioning or the other wireless station.

7. The positioning system according to claim 2, **characterized in** including a means for updating necessary measurement number-of-times conclusion information based upon an acquired measurement result.

8. The positioning system according to claim 7, **characterized in that** the means for updating necessary measurement number-of-times conclusion information performs an operational process weighted with a total measurement number of times for the necessary measurement number-of-times conclusion information and the measurement result, thereby to update the necessary measurement number-of-times conclusion information.

9. The positioning system according to claim 7, **characterized in that** the means for updating necessary measurement number-of-times conclusion information performs an operational process weighted with a total measurement number of times for the necessary measurement number-of-times conclusion information, the acquired measurement result, and a past measurement result, thereby to update the necessary measurement number-of-times conclusion information.

10. The positioning system according to claim 2, **characterized in that** said measurement of said communication situation is a measurement of a radio wave propagation time.

11. The positioning system according to claim 2, **characterized in that** said plurality of said wireless stations perform said measurement of said communication situation.

12. The positioning system according to claim 2, **characterized in that** said wireless station that is an object of positioning performs said measurement of said communication situation.

13. The positioning system according to claim 2, **characterized in that** said wireless station performing said measurement of said communication situation is a wireless base station.

14. The positioning system according to claim 2, **characterized in that** said wireless station performing said measurement of said communication situation is a wireless terminal station.

15. The positioning system according to claim 2, **characterized in that** the decision of said measurement number of times of said communication situation is performed by a positioning server having a connection with each of said plurality of said wireless stations via a network.

**16.** The positioning system according to claim 2, **characterized in that** the decision of said measurement number of times of said communication situation is performed by said plurality of said wireless stations.

**17.** The positioning system according to claim 2, **characterized in that** the decision of said measurement number of times of said communication situation is performed by said wireless station that is an object of positioning.

**18.** The positioning system according to claim 2, **characterized in that** said necessary measurement number-of-times conclusion information is information prepared by taking into consideration the characteristic of the wireless station that is an object of positioning, or the characteristic of the wireless station other than the wireless station that is an object of positioning, or the characteristic of a combination of the wireless station that is an object of positioning and the wireless station other than the wireless station that is an object of positioning, and a positioning quality that is requested.

**19.** The positioning system according to claim 18, **characterized in that** said quality of said positioning is positioning precision information.

**20.** The positioning system according to claim 18, **characterized in that** said quality of said positioning is use application information.

**21.** The positioning system according to claim 2, **characterized in that** said identification information of said wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

**22.** A positioning system for measuring a communication situation between a wireless station that is an object of positioning and each of a plurality of wireless stations other than said wireless station that is an object of positioning, thereby to specify a position of said wireless station that is an object of positioning, **characterized in** including a means for deciding a measurement number of times of the communication situation based upon a characteristic of said wireless station that is an object of positioning, or a characteristic of said plurality of said wireless stations, or a characteristic of a combination of said wireless station that is an object of positioning and said plurality of said wireless stations.

**23.** A positioning server for deciding a measurement number of times of a communication situation in a positioning system for measuring a communication situation between a wireless station that is an object of positioning and each of a plurality of wireless stations other than said wireless station that is an object of positioning, thereby to specify a position of said wireless station that is an object of positioning, **characterized in** including:

a database having identification information of said wireless station that is an object of positioning, or identification information of said plurality of said wireless stations and necessary measurement number-of-times conclusion information for drawing a conclusion on the measurement number of times stored correspondingly to each other, said necessary measurement number-of-times conclusion information derived from a characteristic of said wireless station that is an object of positioning, or a characteristic of said plurality of said wireless stations, or a characteristic of a combination of said wireless station that is an object of positioning and said plurality of said wireless stations; and

a means for receiving identification information of said wireless station that is an object of positioning, or identification information of said plurality of said wireless stations, for retrieving necessary measurement number-of-times conclusion information corresponding to this identification information from said database, and for deciding the measurement number of times based upon this necessary measurement number-of-times conclusion information.

**24.** A positioning server for deciding a measurement number of times of a communication situation in a positioning system for measuring a communication situation between a wireless station that is an object of positioning and each of a plurality of wireless stations other than said wireless station that is an object of positioning, thereby to specify a position of said wireless station that is an object of positioning, **characterized in** including:

a database having a first table, said first table having identification information of said wireless station and group information, being information associated with a group of which a characteristic resembles that of the wireless station, caused to correspond to each other, and a second table filed, said second table having said group information and necessary measurement number-of-times conclusion information caused to correspond to each other, filed; and

a means for receiving identification information of said wireless station that is an object of positioning, or identification information of said plurality of said wireless stations, for retrieving group information corresponding to this identification information from said first table, for retrieving necessary measurement number-of-times conclusion information corresponding to this group information from said second table, and for deciding the measurement number of times based upon this necessary measurement number-of-times conclusion information.

25. The positioning server according to claim 24, **characterized in that** said group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

26. The positioning server according to claim 24, **characterized in** including a means for acquiring MIB information, thereby to acquire said group information.

27. The positioning server according to claim 24, **characterized in that** said necessary measurement number-of-times conclusion information is a measurement number of times.

28. The positioning server according to claim 24, **characterized in that** said necessary measurement number-of-times conclusion information is a standard deviation of a dispersion in an internal process delay in the wireless station that is an object of positioning or the other wireless station.

29. The positioning server according to claim 24, **characterized in** including a means for updating the necessary measurement number-of-times conclusion information based upon an acquired measurement result.

30. The positioning server according to claim 29, **characterized in that** the means for updating necessary measurement number-of-times conclusion information performs an operational process weighted with a total measurement number of times for the necessary measurement number-of-times conclusion information and the measurement result, thereby to update the necessary measurement number-of-times conclusion information.

31. The positioning server according to claim 29, **characterized in that** the means for updating necessary measurement number-of-times conclusion information performs an operational process weighted with a total measurement number of times for the necessary measurement number-of-times conclusion information, the acquired measurement result, and a past measurement result, thereby to update the necessary measurement number-of-times conclusion information.

32. The positioning server according to claim 24, **characterized in that** said measurement of said communication situation is a measurement of a radio wave propagation time.

33. The positioning server according to claim 24, **characterized in** having a connection with each of said plurality of said wireless stations via a network.

34. The positioning server according to claim 24, **characterized in that** said necessary measurement number-of-times conclusion information is information prepared by taking into consideration a characteristic of a wireless station that is an object of positioning, or a characteristic of a wireless station other than said wireless station that is an object of positioning, or a characteristic of a combination of said wireless station that is an object of positioning and the wireless station other than said wireless station that is an object of positioning, and a positioning quality that is requested.

35. The positioning server according to claim 34, **characterized in that** said quality of said positioning is positioning precision information.

36. The positioning server according to claim 34, **characterized in that** said quality of said positioning is use application information.

37. The positioning server according to claim 24, **characterized in that** said identification information of said wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

38. A program for causing an information processing unit to perform a process of deciding a measurement number of times of a communication situation in a positioning system for measuring a communication situation between a wireless station that is an object of positioning and each of a plurality of wireless stations other than said wireless station that is an object of positioning, thereby to specify a position of said wireless station that is an object of positioning, **characterized in** causing said information processing unit to function as a means for receiving identification information of said wireless station that is an object of positioning, or identification information of said plurality of said wireless stations, for retrieving necessary measurement number-of-times conclusion information corresponding to the received identification information from a database having identification information of said wireless station that is an object of positioning, or identification information of said plurality of said wireless stations and necessary measurement number-of-times conclusion information for drawing a conclusion on the measurement number of times stored correspondingly to each other, said necessary measurement number-of-times conclusion information derived from a characteristic of said wireless station that is an object of positioning, or a characteristic of said plurality of said wireless stations, or a characteristic of a combination of said wireless station that is an object of positioning and said plurality of said wireless stations, and for deciding the measurement number of times based upon this necessary measurement number-of-times conclusion information.

39. A program for causing an information processing unit to perform a process of deciding a measurement number of times of a communication situation in a positioning system for measuring a communication situation between a wireless station that is an object of positioning and each of a plurality of wireless stations other than said wireless station that is an object of positioning, thereby to specify a position of said wireless station that is an object of positioning, **characterized in** causing said information processing unit to function as a means for receiving identification information of said wireless station that is an object of positioning, or identification information of said plurality of said wireless stations, for retrieving group information corresponding to this identification information from a table having said identification information of said wireless station and group information, being information associated with a group of which a characteristic resembles that of the wireless station, caused to correspond to each other, retrieving necessary measurement number-of-times conclusion information corresponding to this group information from a table having said group information and the necessary measurement number-of-times conclusion information caused to correspond to each other, and for deciding the measurement number of times based upon this necessary measurement number-of-times conclusion information.

40. The program according to claim 39, **characterized in that** said group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

41. The program according to claim 39, **characterized in** causing said information processing unit to function as a means for acquiring MIB information, thereby to acquire said group information.

42. The program according to claim 39, **characterized in that** said necessary measurement number-of-times conclusion information is a measurement number of times.

43. The program according to claim 39, **characterized in that** said necessary measurement number-of-times conclusion information is a standard deviation of a dispersion in an internal process delay in the wireless station that is an object of positioning or the other wireless station.

44. The program according to claim 39, **characterized in** causing the information processing unit to function as a means for updating the necessary measurement number-of-times conclusion information of the database based upon an acquired measurement result.

45. The program according to claim 39, **characterized in** causing the information processing unit to function as a means for performing an operational process weighted with a total measurement number of times for the necessary measurement number-of-times conclusion information and a measurement result, thereby to update the necessary measurement number-of-times conclusion information of the database.

46. The program according to claim 39, **characterized in** causing the information processing unit to function as a means for performing an operational process weighted with a total measurement number of times for the necessary measurement number-of-times conclusion information, an acquired measurement result, and a past measurement result, thereby to update the necessary measurement number-of-times conclusion information of the database.

47. The program according to claim 39, **characterized in that** said measurement of said communication situation is a measurement of a radio wave propagation time.

48. The program according to claim 39, **characterized in that** the information processing unit has a connection with each of said plurality of said wireless stations via a network.

**49.** The program according to claim 39, **characterized in that** said necessary measurement number-of-times conclusion information is information prepared by taking into consideration a characteristic of the wireless station that is an object of positioning, or a characteristic of the wireless station other than the wireless station that is an object of positioning, or a characteristic of a combination of said wireless station that is an object of positioning and the wireless station other than said wireless station that is an object of positioning, and a positioning quality that is requested.

**50.** The program according to claim 49, **characterized in that** said quality of said positioning is positioning precision information.

**51.** The program according to claim 49, **characterized in that** said quality of said positioning is use application information.

**52.** The program according to claim 39, **characterized in that** said identification information of said wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

**53.** A method of deciding a measurement number of times in a positioning system for measuring a communication situation between a wireless station that is an object of positioning and each of a plurality of wireless stations other than said wireless station that is an object of positioning, thereby to specify a position of said wireless station that is an object of positioning, **characterized in** including a step of deciding the measurement number of times of the communication situation based upon a characteristic of said wireless station that is an object of positioning, or a characteristic of said plurality of said wireless stations, or a characteristic of a combination of said wireless station that is an object of positioning and said plurality of said wireless stations.

**54.** The method of deciding the measurement number of times according to claim 53, **characterized in** including the steps of:

pre-storing identification information of said wireless station that is an object of positioning, or identification information of said plurality of said wireless stations, and necessary measurement number-of-times conclusion information for drawing a conclusion on the measurement number of times correspondingly to each other, said necessary measurement number-of-times conclusion information derived from the characteristic of said wireless station that is an object of positioning, or the characteristic of said plurality of said wireless stations, or the characteristic of a combination of said wireless station that is an object of positioning and said plurality of said wireless stations; and retrieving necessary measurement number-of-times conclusion information corresponding to the received identification information of the wireless station that is an object of positioning, or to the received identification information of the plurality of the wireless stations to decide the measurement number of times based upon this necessary measurement number-of-times conclusion information.

**55.** The method of deciding the measurement number of times according to claim 53, **characterized in** including the steps of:

pre-storing identification information of the wireless station and the necessary measurement number-of-times conclusion information via group information, being information associated with a group of which the characteristic resembles that of the wireless station, correspondingly to each other; and retrieving necessary measurement number-of-times conclusion information corresponding to the received identification information of the wireless station that is an object of positioning, or to the received identification information of the plurality of the wireless stations via the group information to decide the measurement number of times based upon this necessary measurement number-of-times conclusion information.

**56.** The method of deciding the measurement number of times according to claim 55, **characterized in that** said group information is at least one of a model number of the wireless station, a model number of an IC for wireless communication mounted onto the wireless station, manufacturer information of an IC for wireless communication mounted onto the wireless station, and wireless communication technique information to which the IC for wireless communication mounted onto the wireless station corresponds.

**57.** The method of deciding the measurement number of times according to claim 55, **characterized in** including a step of acquiring MIB information, thereby to acquire said group information.

**58.** The method of deciding the measurement number of times according to claim 53, **characterized in that** said necessary measurement number-of-times conclusion information is a measurement number of times.

59. The method of deciding the measurement number of times according to claim 53, **characterized in that** said necessary measurement number-of-times conclusion information is a standard deviation of a dispersion in an internal process delay in the wireless station that is an object of positioning or the other wireless station.

60. The method of deciding the measurement number of times according to claim 53, **characterized in** including a step of updating the necessary measurement number-of-times conclusion information based upon an acquired measurement result.

61. The method of deciding the measurement number of times according to claim 60, **characterized in** including a step of performing an operational process weighted with a total measurement number of times for the necessary measurement number-of-times conclusion information and the measurement result, thereby to update the necessary measurement number-of-times conclusion information.

62. The method of deciding the measurement number of times according to claim 61, **characterized in** including a step of performing an operational process weighted with a total measurement number of times for the necessary measurement number-of-times conclusion information, the acquired measurement result, and a past measurement result, thereby to update the necessary measurement number-of-times conclusion information.

63. The method of deciding the measurement number of times according to claim 53, **characterized in that** said measurement of said communication situation is a measurement of a radio wave propagation time.

64. The method of deciding the measurement number of times according to claim 53, **characterized in that** said plurality of said wireless stations perform said measurement of said communication situation.

65. The method of deciding the measurement number of times according to claim 53, **characterized in that** said wireless station that is an object of positioning performs said measurement of said communication situation.

66. The method of deciding the measurement number of times according to claim 53, **characterized in that** said wireless station performing said measurement of said communication situation is a wireless base station.

67. The method of deciding the measurement number of times according to claim 53, **characterized in that** said wireless station performing said measurement of said communication situation is a wireless terminal station.

68. The method of deciding the measurement number of times according to claim 53, **characterized in that** said decision of the measurement number of times of said communication situation is performed by a positioning server having a connection with each of said plurality of said wireless stations via a network.

69. The method of deciding the measurement number of times according to claim 53, **characterized in that** said decision of the measurement number of times of said communication situation is performed by said plurality of said wireless stations.

70. The method of deciding the measurement number of times according to claim 53, **characterized in that** said decision of the measurement number of times of said communication situation is performed by said wireless station that is an object of positioning.

71. The method of deciding the measurement number of times according to claim 53, **characterized in that** said necessary measurement number-of-times conclusion information is information prepared by taking into consideration the characteristic of the wireless station that is an object of positioning, or the characteristic of the wireless station other than the wireless station that is an object of positioning, or the characteristic of a combination of said wireless station that is an object of positioning and the wireless station other than said wireless station that is an object of positioning, and a positioning quality that is requested.

72. The method of deciding the measurement number of times according to claim 71, **characterized in that** said quality of said positioning is positioning precision information.

73. The method of deciding the measurement number of times according to claim 71, **characterized in that** said quality of said positioning is use application information.

74. The method of deciding the measurement number of times according to claim 53, **characterized in that** said identification information of said wireless station is at least one of a person name using the wireless station, a personal ID of a person using the wireless station, an appliance name registered to a wireless station appliance, an MAC address of the wireless station, an IP address of the wireless station, and an arbitrary ID allocated to the wireless station.

**75.** A positioning system for measuring a communication situation between a wireless station that is an object of positioning and each of a plurality of wireless stations other than said wireless station that is an object of positioning, thereby to specify a position of said wireless station that is an object of positioning, **characterized in** including a means for, based upon a set measurement number of times and a measurement result based upon said set measurement number of times, obtaining a new measurement number of times to performing the positioning again by this measurement number of times.

**76.** A method of deciding a measurement number of times in a positioning system for measuring a communication situation between a wireless station that is an object of positioning and each of a plurality of wireless stations other than said wireless station that is an object of positioning, thereby to specify a position of said wireless station that is an object of positioning, **characterized in** including a step of, based upon a set measurement number of times and a measurement result based upon said set measurement number of times, deciding a new measurement number of times.

**77.** A positioning server, **characterized in**:

based upon a measurement result of a communication situation between each of a plurality of wireless stations having a connection therewith and a wireless station that is a subordinate of said plurality of said wireless stations, specifying a position of said wireless station that is an subordinate; and
deciding a measurement number of times of the communication situation based upon a characteristic of said wireless station that is an subordinate, or a characteristic of said plurality of said wireless stations, or a characteristic of a combination of said wireless station that is an subordinate and said plurality of said wireless stations.

**78.** A wireless station, **characterized in**:

receiving a positioning request including information associated with a characteristic of a wireless station that is a subordinate from a server having a connection therewith to measure a distance with said wireless station that is a subordinate, and to send this measured distance to said server in which a position of a terminal, being a subordinate, is specified; and
deciding a measurement number of times of said distance based upon said characteristic of said wireless station that is a subordinate. 79 A wireless station, **characterized in**:
receiving a positioning request from a server, said positioning request from said server including a characteristic of its own wireless station and a requested positioning quality, to measure distances with a plurality of the wireless stations each of which is a connection destination, to send said measured distances to said server having a connection with said plurality of said wireless stations, in which a position of its own wireless station is specified: and
deciding a measurement number of times of said distance based upon said characteristic of its own wireless station and said requested positioning quality.

# FIG. 1

POSITIONING SERVER — 20

NETWORK — 90

POSITIONING REQUEST SOURCE — 10

WIRELESS BASE STATION — 50

WIRELESS BASE STATION — 70

WIRELESS BASE STATION — 70

WIRELESS TERMINAL STATION — 80

WIRELESS TERMINAL STATION — 60

WIRELESS TERMINAL STATION — 80

WIRELESS BASE STATION — 30

WIRELESS BASE STATION — 40

WIRELESS BASE STATION — 70

EP 1 726 970 A1

# FIG. 2

# FIG. 3

WIRELESS
BASE
STATION  40  3040

3050

3030  3010

WIRELESS
TERMINAL
STATION

3000  3020

30  WIRELESS
BASE
STATION  60  WIRELESS
BASE
STATION  50

EP 1 726 970 A1

# FIG. 4

# FIG. 5

# FIG. 6

5010

| PERSONAL INFORMATION | | | | | | NECESSARY MEASUREMENT NUMBER-OF-TIMES CONCLUSION INFORMATION |
|---|---|---|---|---|---|---|
| NAME | PERSONAL ID | PC NAME | MAC ADDRESS | IP ADDRESS | WIRELESS STATION ID | |
| A SAN | 0000 | A-PC | 001100110011 | 10.10.10.10 | 01 | $\sigma 1$ |
| B SAN | 0001 | B-PC | 001122110011 | 10.10.10.20 | 02 | $\sigma 2$ |
| C SAN | 0002 | C-NOTE | 001122332211 | 10.10.10.30 | 03 | $\sigma 3$ |
| D SAN | 0003 | D | 001122334433 | 10.10.10.13 | 04 | $\sigma 4$ |
| E SAN | 0004 | E-san | 001122334455 | 10.10.10.14 | 05 | $\sigma 5$ |
| F SAN | 0005 | FFFF | 001122001122 | 10.10.10.15 | 06 | $\sigma 6$ |
| G SAN | 0006 | Ginga | 001122330011 | 10.10.10.16 | 07 | $\sigma 7$ |
|  |  |  |  |  |  |  |

# FIG. 7

5000

| TERMINAL | REQUESTED POSITIONING PRECISION | | | | |
|---|---|---|---|---|---|
| | 1 m | 2 m | 3 m | ••• | 10 m |
| TERMINAL A | 500 | 400 | 300 | ••• | 50 |
| TERMINAL B | 100 | 70 | 50 | ••• | 10 |
| ⋮ | ⋮ | ⋮ | ⋮ | ••• | ⋮ |
| TERMINAL Z | 300 | 150 | 100 | ••• | 30 |

FIG. 8

```
         ┌─────────────────────┐
         │ POSITIONING STARTED │
         └─────────────────────┘
                    │
                    ▼
         ┌─────────────────────┐
         │ RECEIVING POSITIONING│  300
         │ REQUEST INFORMATION  │
         └─────────────────────┘
                    │
                    ▼
         ┌─────────────────────┐
         │ FUNCTION OF DECIDING │  301
         │ WIRELESS BASE STATION│
         │PERFORMING MEASUREMENT│
         └─────────────────────┘
                    │
                    ▼
         ┌─────────────────────┐
         │ FUNCTION OF DECIDING │  302
         │NECESSARY MEASUREMENT │
         │   NUMBER OF TIMES    │
         └─────────────────────┘
                    │
                    ▼
         ┌─────────────────────┐
         │PREPARING MEASUREMENT │  303
         │ REQUEST INFORMATION  │
         └─────────────────────┘
                    │
                    ▼
         ┌─────────────────────┐
         │TRANSMITTING MEASUREMENT│ 304
         │ REQUEST INFORMATION TO │
         │EACH WIRELESS BASE STATION│
         │PERFORMING MEASUREMENT │
         └─────────────────────┘
```

```
         ┌─────────────────────┐
         │RECEIVING MEASUREMENT │
         │RESULT FROM EACH WIRELESS│ 305
         │BASE STATION PERFORMING│
         │    MEASUREMENT       │
         └─────────────────────┘
                    │
                    ▼
         ┌─────────────────────┐
         │CALCULATING POSITION OF│ 306
         │POSITIONING-OBJECT WIRELESS│
         │  TERMINAL STATION    │
         └─────────────────────┘
                    │
                    ▼
         ┌─────────────────────┐
         │TRANSMITTING POSITIONAL│ 307
         │INFORMATION TO POSITIONING│
         │  REQUEST SOURCE      │
         └─────────────────────┘
                    │
                    ▼
         ┌─────────────────────┐
         │ POSITIONING FINISHED │
         └─────────────────────┘
```

34

# FIG. 9

```
┌─────────────────────────┐
│  FUNCTION OF DECIDING    │
│  NECESSARY MEASUREMENT   │
│  NUMBER-OF-TIMES STARTED │
└─────────────────────────┘
             │
             ▼
          1100
    ╱◇◇◇◇◇◇◇◇◇◇◇◇╲
   NECESSARY
   MEASUREMENT NUMBER-
   OF-TIMES CONCLUSION                    N
   INFORMATION ASSOCIATED WITH ─────────────┐
   WIRELESS TERMINAL STATION THAT IS         │
   OBJECT OF POSITIONING                     │
   EXISTS?                                   │
    ╲◇◇◇◇◇◇◇◇◇◇◇◇╱                           │
             │ Y                             │
             │    1110                1120   │
             ▼                               ▼
┌─────────────────────────┐   ┌─────────────────────────┐
│  READING OUT NECESSARY   │   │   SUBSTITUTING X INTO    │
│  MEASUREMENT NUMBER-OF-  │   │      NECESSARY           │
│  TIMES CONCLUSION        │   │  MEASUREMENT NUMBER-     │
│  INFORMATION OF WIRELESS │   │  OF-TIMES CONCLUSION     │
│  TERMINAL STATION        │   │  INFORMATION             │
└─────────────────────────┘   └─────────────────────────┘
             │                               │
             │◄──────────────────────────────┘
             ▼      1130
┌─────────────────────────┐
│  DECIDING NECESSARY      │
│  MEASUREMENT NUMBER-OF-  │
│  TIMES                   │
└─────────────────────────┘
             │
             ▼
┌─────────────────────────┐
│  FUNCTION OF DECIDING    │
│  NECESSARY MEASUREMENT   │
│  NUMBER-OF-TIMES FINISHED│
└─────────────────────────┘
```

# FIG. 10

FUNCTION OF DECIDING
NECESSARY MEASUREMENT
NUMBER-OF-TIMES STARTED

1200

GROUP
INFORMATION OF WIRELESS
TERMINAL STATION THAT
IS OBJECT OF POSITIONING CAN
BE ACQUIRED?

N

Y

1210

NECESSARY
MEASUREMENT NUMBER-
OF-TIMES CONCLUSION
INFORMATION CORRESPONDING TO
GROUP INFORMATION
EXISTS?

N

Y

1230

READING OUT NECESSARY
MEASUREMENT NUMBER-OF-
TIMES CONCLUSION
INFORMATION OF GROUP
INFORMATION

1220

SUBSTITUTING X INTO
NECESSARY
MEASUREMENT NUMBER-
OF-TIMES CONCLUSION
INFORMATION

1240

DECIDING MEASUREMENT
NUMBER OF TIMES

FUNCTION OF DECIDING
NECESSARY MEASUREMENT
NUMBER-OF-TIMES FINISHED

36

# FIG. 11

EP 1 726 970 A1

FIG. 12

| PERSONAL INFORMATION | | | | GROUP INFORMATION | | | |
|---|---|---|---|---|---|---|---|
| NAME | PERSONAL ID | ....... | WIRELESS STATION ID | MODEL NUMBER OF PRODUCT | MODEL NUMBER OF IC FOR WIRELESS COMMUNICATION | MANUFACTURER INFORMATION OF IC FOR WIRELESS COMMUNICATION | CORRESPONDENCE WIRELESS COMMUNICATION TECHNIQUE |
| A SAN | 0000 | ....... | 01 | XX-01 | MUSEN-001 | Z COMPANY | 11b |
| B SAN | 0001 | ....... | 02 | XX-03 | MUSEN-003 | Z COMPANY | 11a/11b/11g |
| C SAN | 0002 | ....... | 03 | Y-001 | MUSEN-001 | Z COMPANY | 11b |
| D SAN | 0003 | ....... | 04 | DDD | D-MUSEN | D COMPANY | 11a/11b |
| E SAN | 0004 | ....... | 05 | | | | |
| F SAN | 0005 | ....... | 06 | XX-03 | | | |
| G SAN | 0006 | ....... | 07 | | | Z COMPANY | 11b |
| | | | | | | | |

5020

EP 1 726 970 A1

## FIG. 13

FUNCTION OF DECIDING
NECESSARY MEASUREMENT
NUMBER-OF-TIMES STARTED

1300

NECESSARY
MEASUREMENT NUMBER-
OF-TIMES CONCLUSION
INFORMATION ASSOCIATED WITH
POSITIONING-OBJECT
TERMINAL EXISTS?

N

Y

1320

GROUP
INFORMATION OF WIRELESS
TERMINAL STATION THAT IS OBJECT
OF POSITIONING CAN BE
ACQUIRED?

N

Y

1330

NECESSARY
MEASUREMENT NUMBER-
OF-TIMES CONCLUSION
INFORMATION CORRESPONDING TO
GROUP INFORMATION
EXISTS?

N

1310

READING OUT NECESSARY
MEASUREMENT NUMBER-
OF-TIMES CONCLUSION
INFORMATION OF
POSITIONING-OBJECT
TERMINAL

1350    Y

READING OUT NECESSARY
MEASUREMENT NUMBER-
OF-TIMES CONCLUSION
INFORMATION OF GROUP
INFORMATION

1340

SUBSTITUTING X
INTO NECESSARY
MEASUREMENT
NUMBER-OF-TIMES
CONCLUSION
INFORMATION

1360

DECIDING MEASUREMENT
NUMBER OF TIMES

FUNCTION OF DECIDING
NECESSARY
MEASUREMENT NUMBER-
OF-TIMES FINISHED

# FIG. 14

FUNCTION OF DECIDING
NECESSARY MEASUREMENT
NUMBER-OF-TIMES STARTED

1400

NECESSARY
MEASUREMENT NUMBER-
OF-TIMES CONCLUSION INFORMATION
ASSOCIATED WITH WIRELESS TERMINAL
STATION THAT IS OBJECT OF
POSITIONING EXISTS?

N

Y

1410

READING OUT NECESSARY
MEASUREMENT NUMBER-OF-
TIMES CONCLUSION
INFORMATION OF WIRELESS
TERMINAL STATION

1420

SUBSTITUTING X INTO
NECESSARY
MEASUREMENT NUMBER-
OF-TIMES CONCLUSION
INFORMATION

1430

READING OUT NECESSARY
MEASUREMENT NUMBER-OF-
TIMES CONCLUSION
INFORMATION OF
MEASUREMENT-
PERFORMANCE WIRELESS
BASE STATION

1440

DECIDING MEASUREMENT
NUMBER OF TIMES

FUNCTION OF DECIDING
NECESSARY MEASUREMENT
NUMBER-OF-TIMES FINISHED

# FIG. 15

MEASUREMENT-PERFORMANCE BASE STATION

4211

MEASUREMENT NUMBER-OF-TIMES DECISION FUNCTION

TO WIRE NETWORK

TO WIRELESS NETWORK

MEASUREMENT PROCESS CONTROLLER

4210

# FIG. 16

POSITIONING REQUEST SOURCE 10

POSITIONING SERVER 20

WIRELESS BASE STATION 30

WIRELESS BASE STATION 40

WIRELESS BASE STATION 50

WIRELESS TERMINAL STATION 60

110

PREPARING MEASUREMENT REQUEST

111

112

113

SETTING MEASUREMENT NUMBER OF TIMES

114

115

116

SPECIFYING POSITION OF TERMINAL

117

# FIG. 17

POSITIONING
REQUEST
SOURCE
10

POSITIONING
SERVER
20

WIRELESS
BASE
STATION
30

WIRELESS
BASE
STATION
40

• • • •

WIRELESS
BASE
STATION
50

WIRELESS
TERMINAL
STATION
60

170

PREPARING
MEASUREMENT REQUEST

172

171

174

173

175

SPECIFYING POSITION
OF TERMINAL

UPDATING INFORMATION
NECESSARY FOR
DECIDING MEASUREMENT
NUMBER OF TIMES

176

177

## FIG. 18

POSITIONING SERVER

DATABASE SECTION — 212

211

NECESSARY MEASUREMENT NUMBER-OF-TIMES DECISION FUNCTION SECTION

DATABASE INFORMATION LEARNING-FUNCTION SECTION

213

POSITIONING REQUEST TO WIRELESS TERMINAL

OBJECT OF MEASUREMENT TO WIRELESS BASE STATION

POSITIONING PROCESS CONTROLLER

210

EP 1 726 970 A1

## FIG. 19

POSITIONING STARTED

RECEIVING POSITIONING REQUEST INFORMATION — 310

FUNCTION OF DECIDING WIRELESS BASE STATION PERFORMING MEASUREMENT — 311

FUNCTION OF DECIDING NECESSARY MEASUREMENT NUMBER OF TIMES — 312

PREPARING MEASUREMENT REQUEST INFORMATION — 313

TRANSMITTING MEASUREMENT REQUEST INFORMATION TO EACH WIRELESS BASE STATION PERFORMING MEASUREMENT — 314

RECEIVING MEASUREMENT RESULT FROM EACH WIRELESS BASE STATION PERFORMING MEASUREMENT — 315

CALCULATING POSITION OF POSITIONING-OBJECT WIRELESS TERMINAL STATION — 316

FUNCTION OF LEARNING DATABASE INFORMATION — 317

TRANSMITTING POSITIONAL INFORMATION TO POSITIONING REQUEST SOURCE — 318

POSITIONING FINISHED

# FIG. 20

```
┌─────────────────────────┐
│  FUNCTION OF LEARNING   │
│  DATABASE INFORMATION   │
│        STARTED          │
└─────────────────────────┘
            │
            ▼
┌─────────────────────────┐
│  ACQUIRING INFORMATION OF│    2000
│  RESULT OF POSITIONING  │
└─────────────────────────┘
            │
            ▼
┌─────────────────────────┐
│   ACQUIRING NECESSARY   │
│ MEASUREMENT NUMBER-OF-  │    2010
│  TIMES CONCLUSION       │
│   INFORMATION FROM      │
│  DATABASE SECTION       │
└─────────────────────────┘
            │
            ▼
┌─────────────────────────┐
│ RECALCULATING NECESSARY │    2020
│ MEASUREMENT NUMBER-OF-  │
│    TIMES CONCLUSION     │
│     INFORMATION         │
└─────────────────────────┘
            │
            ▼
┌─────────────────────────┐
│  UPDATING NECESSARY     │
│ MEASUREMENT NUMBER-OF-  │    2030
│   TIMES CONCLUSION      │
│   INFORMATION OF        │
│ POSITIONING-OBJECT      │
│  TERMINAL STATION       │
└─────────────────────────┘
            │
            ▼
┌─────────────────────────┐
│  FUNCTION OF LEARNING   │
│  DATABASE INFORMATION   │
│       FINISHED          │
└─────────────────────────┘
```

# FIG. 21

```
┌─────────────────────────┐
│ FUNCTION OF LEARNING    │
│ DATABASE INFORMATION    │
│ STARTED                 │
└─────────────────────────┘
            │
            ▼
┌─────────────────────────┐
│ ACQUIRING INFORMATION OF│   2100
│ RESULT OF POSITIONING   │
└─────────────────────────┘
            │
            ▼
┌─────────────────────────┐
│ ACQUIRING PAST          │
│ MEASUREMENT RESULT      │
│ INFORMATION AND         │   2110
│ NECESSARY MEASUREMENT   │
│ NUMBER-OF-TIMES         │
│ CONCLUSION INFORMATION  │
│ FROM DATABASE SECTION   │
└─────────────────────────┘
            │
            ▼
┌─────────────────────────┐
│ RECALCULATING NECESSARY │
│ MEASUREMENT NUMBER-OF-  │
│ TIMES CONCLUSION        │   2120
│ INFORMATION AND PAST    │
│ MEASUREMENT RESULT      │
│ INFORMATION             │
└─────────────────────────┘
            │
            ▼
┌─────────────────────────┐
│ UPDATING NECESSARY      │
│ MEASUREMENT NUMBER-OF-  │
│ TIMES CONCLUSION        │
│ INFORMATION AND PAST    │   2130
│ MEASUREMENT RESULT      │
│ INFORMATION OF          │
│ POSITIONING-OBJECT      │
│ TERMINAL STATION        │
└─────────────────────────┘
            │
            ▼
┌─────────────────────────┐
│ FUNCTION OF LEARNING    │
│ DATABASE INFORMATION    │
│ FINISHED                │
└─────────────────────────┘
```

# FIG. 22

## FIG. 23

```
┌─────────────────────────┐
│  FUNCTION OF DECIDING    │
│  NECESSARY MEASUREMENT   │
│  NUMBER-OF-TIMES STARTED │
└─────────────────────────┘
            │
            ▼
```

1500

```
          NECESSARY
     MEASUREMENT NUMBER-OF-
  TIMES CONCLUSION INFORMATION          N
  ASSOCIATED WITH WIRELESS BASE ────────────┐
     STATION THAT IS OBJECT OF               │
       POSITIONING EXISTS?                   │
            │ Y                              │
            ▼                                ▼
```

1510                          1520

| READING OUT NECESSARY MEASUREMENT NUMBER-OF-TIMES CONCLUSION INFORMATION OF MEASUREMENT-OBJECT WIRELESS BASE STATION | SUBSTITUTING X INTO NECESSARY MEASUREMENT NUMBER-OF-TIMES CONCLUSION INFORMATION |
|---|---|

```
            │                                │
            ▼◄───────────────────────────────┘
```

1530

```
┌─────────────────────────┐
│  DECIDING MEASUREMENT    │
│    NUMBER OF TIMES       │
└─────────────────────────┘
            │
            ▼
┌─────────────────────────┐
│  FUNCTION OF DECIDING    │
│  NECESSARY MEASUREMENT   │
│ NUMBER-OF-TIMES FINISHED │
└─────────────────────────┘
```

## FIG. 24

```
┌────────────────────────────────────────────────────────┐
│  POSITIONING-OBJECT TERMINAL STATION                   │
│                                                        │
│   4111    ┌──────────────────────────────┐             │
│           │  MEASUREMENT NUMBER-OF-      │             │
│           │  TIMES DECISION FUNCTION     │             │
│           │  SECTION                     │             │
│           └──────────────────────────────┘             │
│                    ▲    │                               │
TO WIRELESS          │    ▼                               │
NETWORK    ┌──────────────────────────────────────┐      │
 ───────►  │  MEASUREMENT PROCESS CONTROLLER      │      │
 ◄───────  └──────────────────────────────────────┘      │
│                                                        │
└────────────────────────────────────────────────────────┘
         4110
```

# FIG. 25

POSITIONING
REQUEST
SOURCE
10

POSITIONING
SERVER
20

WIRELESS
BASE
STATION
30

WIRELESS
BASE      . . . .
STATION
40

WIRELESS
BASE
STATION
50

WIRELESS
TERMINAL
STATION
60

130

PREPARING
MEASUREMENT REQUEST

131

132

133

DECIDING
MEASUREMENT
NUMBER OF TIMES

134

136

SPECIFYING POSITION
OF TERMINAL

135

137

# FIG. 26

POSITIONING
REQUEST
SOURCE
10

POSITIONING
SERVER
20

WIRELESS
BASE
STATION
30

WIRELESS
BASE
STATION
40

WIRELESS
. . . . BASE
STATION
50

WIRELESS
TERMINAL
STATION
60

140

PREPARING
MEASUREMENT REQUEST

142

141

144

143

DECIDING
MEASUREMENT
NUMBER OF TIMES

145

146

# FIG. 27

# FIG. 28

# FIG. 29

WIRELESS STATION A-WIRELESS STATION B

EXISTENCE PROBABILITY

MEASUREMENT DISTANCE RESULT

WIRELESS STATION A-WIRELESS STATION C

EXISTENCE PROBABILITY

MEASUREMENT DISTANCE RESULT

EP 1 726 970 A1

## FIG. 30

<table>
<tr><td colspan="2">5030</td></tr>
<tr><td>GROUP INFORMATION</td><td>NECESSARY MEASUREMENT NUMBER-OF-TIMES CONCLUSION INFORMATION</td></tr>
<tr><td>MODEL NUMBER OF PRODUCT</td><td></td></tr>
<tr><td>XX-01</td><td>$\sigma 10$</td></tr>
<tr><td>XX-03</td><td>$\sigma 11$</td></tr>
<tr><td>Y-001</td><td>$\sigma 12$</td></tr>
<tr><td>DDD</td><td>$\sigma 13$</td></tr>
<tr><td></td><td></td></tr>
</table>

<table>
<tr><td colspan="2">GROUP INFORMATION</td><td>5040<br>NECESSARY MEASUREMENT NUMBER-OF-TIMES CONCLUSION INFORMATION</td></tr>
<tr><td>MANUFACTURER INFORMATION OF IC FOR WIRELESS COMMUNICATION</td><td>CORRESPONDENCE WIRELESS COMMUNICATION TECHNIQUE</td><td></td></tr>
<tr><td>Z COMPANY</td><td>11b</td><td>$\sigma 14$</td></tr>
<tr><td>Z COMPANY</td><td>11a/11b/11g</td><td>$\sigma 15$</td></tr>
<tr><td>D COMPANY</td><td>11a/11b</td><td>$\sigma 16$</td></tr>
<tr><td></td><td></td><td></td></tr>
</table>

<table>
<tr><td colspan="2">5050</td></tr>
<tr><td>GROUP INFORMATION</td><td>NECESSARY MEASUREMENT NUMBER-OF-TIMES CONCLUSION INFORMATION</td></tr>
<tr><td>MODEL NUMBER OF IC FOR WIRELESS COMMUNICATION</td><td></td></tr>
<tr><td>MUSEN-001</td><td>$\sigma 17$</td></tr>
<tr><td>MUSEN-003</td><td>$\sigma 18$</td></tr>
<tr><td>D-MUSEN</td><td>$\sigma 19$</td></tr>
<tr><td></td><td></td></tr>
</table>

<div style="text-align:center">**INTERNATIONAL SEARCH REPORT**</div>

| International application No. |
| --- |
| PCT/JP2005/004094 |

| A. CLASSIFICATION OF SUBJECT MATTER |
| --- |
| Int.Cl$^7$ G01S5/02, H04B7/26 |
| |
| According to International Patent Classification (IPC) or to both national classification and IPC |

| B. FIELDS SEARCHED |
| --- |
| Minimum documentation searched (classification system followed by classification symbols) |
| Int.Cl$^7$ G01S5/02, H04B7/26 |
| |

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-128222 A (Matsushita Electric Industrial Co., Ltd.), 11 May, 2001 (11.05.01), Full text; all drawings (Family: none) | 1-79 |
| A | JP 2003-302457 A (NEC Corp.), 24 October, 2003 (24.10.03), Full text; all drawings (Family: none) | 1-79 |
| A | JP 10-94040 A (Matsushita Electric Industrial Co., Ltd.), 10 April, 1998 (10.04.98), Full text; all drawings (Family: none) | 1-79 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 March, 2005 (30.03.05) | 19 April, 2005 (19.04.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2005/004094 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-228735 A  (Hitachi, Ltd.),<br>14 August, 2002 (14.08.02),<br>Full text; all drawings<br>(Family: none) | 1-79 |

Form PCT/ISA/210 (continuation of second sheet) (January 2004)

**EP 1 726 970 A1**

**REFERENCES CITED IN THE DESCRIPTION**

**Patent documents cited in the description**

- JP P2002228735 A